# EUROPÄISCHE PATENTSCHRIFT

(11) **EP 3 037 837 B1**
(45) Veröffentlichungstag und Bekanntmachung des Hinweises auf die Patenterteilung: **08.02.2023**
(21) Anmeldenummer: 14199627.2
(22) Anmeldetag: 22.12.2014
(51) Int. Cl.: G01S 1/70, G01S 5/16

(54) **Verfahren und Positionsbestimmungssystem zum Bestimmen der Position wenigstens einer mobilen, eine digitale Bilderfassungseinrichtung aufweisenden Kommunikationseinrichtung**
Method and positioning system for determining the position of at least one mobile communication device having a digital imaging device
Procédé et système de détermination de position d'au moins un dispositif de communication mobile comprenant un dispositif de détection d'image numérique

(43) Veröffentlichungstag der Anmeldung: 29.06.2016
(73) Patentinhaber: Deutsche Telekom AG, 53113 Bonn (DE)
(72) Erfinder: Witych, Michael, 53227 Bonn (DE)
(74) Vertreter: Blumbach · Zinngrebe Patentanwälte PartG mbB

(56) Entgegenhaltungen:
- EP-A2- 2 410 348
- EP-A2- 2 738 519
- WO-A2-2012/087944
- US-A1- 2002 089 722
- US-A1- 2013 027 576
- US-A1- 2014 093 249
- US-A1- 2014 198 206
- US-B1- 6 241 364

## Beschreibung

Die Erfindung betrifft ein Verfahren sowie ein Positionsbestimmungssystem zum Bestimmen der Position wenigstens einer mobilen, eine digitale Bilderfassungseinrichtung aufweisenden Kommunikationseinrichtung mit Hilfe von lichtbasierten stationären Einrichtungen, einen Server und eine mobile Kommunikationseinrichtung zum Einsatz in einem solchen Positionsbestimmungssystem sowie ein Computerprogramm.

Auf dem Markt sind Mobilfunktelefone, insbesondere sogenannte Smartphones, erhältlich, die unter anderem eine digitale Kamera, einen GPS-Empfänger und Bewegungssensoren zur Bestimmung der Änderung von Positionen und Orientierungen enthalten können. Mit Hilfe einer digitalen Kamera können unter Auswertung digitaler Bildinformationen 3-dimensionale Orientierungen eines Smartphones absolut im Raum bestimmt werden. Ein Gyroskop kann relative Änderungen von Orientierung erfassen. Mit Hilfe eines GPS-Empfängers kann die absolute Position des Smartphones berechnet werden. Mit einem Beschleunigungsmesser können relative Positionsänderungen erfasst werden.

Aus US 2013/0027576 A1 sind Infrarotbaken bekannt, welche eine eindeutige Identifikationsnummer aussenden, wobei mit der eindeutigen Identifikationsnummer verknüpfte Standortinformationen über das Internet oder über lokale Datenbankdienste zur räumlichen Lokalisierung verfügbar sind, und wobei im Betrieb ein mit einem Infrarotempfänger ausgestattetes tragbares Computergerät das Datensignal der Infrarotbake empfangen kann, was eine hochpräzise Bestimmung des physischen Standorts sowohl in Innenräumen als auch im Freien ermöglicht.

Der Erfindung liegt die Aufgabe zugrunde, ein Verfahren, ein Positionsbestimmungssystem, eine mobile Kommunikationseinrichtung und ein Computerprogramm bereitzustellen, die ermöglichen, dass eine mobile Kommunikationseinrichtung, welche eine digitale Bilderfassungseinrichtung aufweist, ihre Position und/oder Orientierung selbst bestimmen kann, auch wenn keine GPS-Signale empfangen werden oder überhaupt kein GPS-Empfänger implementiert ist.

Ein Kerngedanke der Erfindung kann darin gesehen werden, dass die Position und/oder Orientierung einer mobilen, drahtlosen Kommunikationseinrichtung dadurch bestimmt werden kann, dass wenigstens drei lichtbasierte stationäre Einrichtungen, deren Positionen bezüglich eines gemeinsamen Objektraumkoordinatensystems bekannt sind, von der digitalen Bilderfassungseinrichtung der mobilen Kommunikationseinrichtung angezielt werden, die von den wenigstens drei lichtbasierten stationären Einrichtungen ausgesendeten lichtmodulierten Signale, welche unter anderem einrichtungsbezogene positionsbezogene Informationen enthalten, ausgewertet werden, um die Position und/oder Orientierung der mobilen Kommunikationseinrichtung unter Ausführung eines räumlichen Rückwärtsschnitts zu berechnen. Die lichtbasierten stationären Einrichtungen können zum Beispiel jeweils eine VLC-fähige LED enthalten.

Angemerkt sei an dieser Stelle, dass zwischen der mobilen Kommunikationseinrichtung und den lichtbasierten stationären Einrichtungen vorzugsweise lediglich eine unidirektionale Kommunikation von den lichtbasierten stationären Einrichtungen zur mobilen Kommunikationseinrichtung möglich ist.

Die Erfindung macht Gebrauch von den Kenntnissen und mathematischen Gleichungsmodellen des aus der Photogrammetrie und Geodäsie bekannten räumlichen Rückwärtsschnittes, um die Position und/oder Orientierung einer mobilen Kommunikationseinrichtung, welche eine digitale Bilderfassungseinrichtung aufweist, zu schätzen.

Das oben genannte technische Problem wird zum Einen durch die Verfahrensschritte des Anspruchs 1 gelöst.

Danach wird ein Verfahren zum Bestimmen der Position wenigstens einer mobilen, eine digitale Bilderfassungseinrichtung aufweisenden Kommunikationseinrichtung mit Hilfe von lichtbasierten stationären Einrichtungen mit folgenden Verfahrensschritten umschrieben:
a) Aussenden lichtmodulierter Signale von mindesten drei lichtbasierten stationären Einrichtungen, deren Positionen bekannt sind, wobei jede der mindestens drei lichtbasierten stationären Einrichtungen lichtmodulierte Signale aussendet, welche eine positionsbezogene Information, welche der Position der jeweiligen lichtbasierten Einrichtung zugeordnet ist, übertragen;
b) Detektieren, in einer mobilen Kommunikationseinrichtung, der von den mindestens drei lichtbasierten stationären Einrichtungen ausgesendeten lichtmodulierten Signale, und Gewinnen aus jedem detektierten lichtmodulierten Signal die jeweilige positionsbezogene Information;
c) Auswerten, in der mobilen Kommunikationseinrichtung, der in Schritt b) gewonnenen positionsbezogenen Informationen, um die Position der jeweiligen lichtbasierten stationären Einrichtung zu erhalten;
d) Bestimmen, mit Hilfe der digitalen Bilderfassungseinrichtung der mobilen Kommunikationseinrichtung, bezüglich jeder der mindestens drei lichtbasierten stationären Einrichtungen einer Beobachtungsinformation; und
e) Schätzen, in der mobilen Kommunikationseinrichtung, die Position der mobilen Kommunikationseinrichtung in Abhängigkeit von den Positionen der wenigstens drei lichtbasierten stationären Einrichtungen und den wenigstens drei Beobachtungsinformationen unter Ausführung eines räumlichen Rückwärtsschnitts.

Es wird darauf hingewiesen, dass Verfahrensschritt c) des Anspruches 1 zumindest die folgenden beiden Fälle erfassen kann:
i) Eine positionsbezogene Information enthält unmittelbar die Positionskoordinaten und gegebenenfalls deren Genauigkeit bezüglich eines gegebenen Objektraumkoordinatensystems, d.h. die Position der lichtbasierten stationären Einrichtung, welche diese positionsbezogene Information mittels lichtmodulierter Signale aussendet. In diesem Fall sind die Positionskoordinaten und gegebenenfalls deren Genauigkeiten in der entsprechenden lichtbasierten stationären Einrichtung gespeichert.
ii) Eine positionsbezogene Information enthält eine einrichtungsbezogene, individuelle Kennung derjenigen lichtbasierten stationären Einrichtung, welche diese positionsbezogene Information mittels lichtmodulierter Signale aussendet. In diesem Fall ist eine Speichereinrichtung, welche in einem Server implementiert sein kann, vorgesehen, in welcher für jede individuelle Kennung die Positionskoordinaten und gegebenenfalls deren Genauigkeit, d.h. die Position der dazugehörenden lichtbasierten stationären Einrichtung, gespeichert ist. Unter Ansprechen auf eine empfangene individuelle Kennung kann die mobile Kommunikationseinrichtung dann die dazugehörenden Positionskoordinaten und gegebenenfalls deren Genauigkeiten aus der Speichereinrichtung abfragen. Neben den Positionskoordinaten kann auch das zugrunde gelegte Objektraumkoordinatensystem in der Speichereinrichtung mit gespeichert und abgefragt werden.

Ein Vorteil dieser Maßnahme ii) gegenüber der erstgenannten ist darin zu sehen, dass, sollten lichtbasierte stationäre Einrichtungen erstmals installiert oder neu angeordnet werden, deren Positionen nicht in jeder entsprechenden lichtbasierten stationären Einrichtung gespeichert werden müssen. Vielmehr genügt es, dass die Positionen der erstmalig oder neu eingemessenen lichtbasierten stationären Einrichtungen unter Verwendung der jeweiligen individuellen Kennungen beispielsweise von einer Bedienperson mittels einer mobilen Kommunikationseinrichtung, z.B. einem Smartphone, über ein Mobilfunknetz in der Speichereinrichtung abgelegt werden können.

Bei der mobilen Kommunikationseinrichtung handelt es sich um ein drahtloses mobiles Geräte, insbesondere um Mobilfunktelefone, wie zum Beispiel Smartphones.

Unter lichtmodulierten Signalen werden vorzugsweise Lichtsignale verstanden, bei denen die Lichtintensität oder die Wellenlänge des Lichts von der jeweiligen lichtbasierten stationären Einrichtung moduliert wird.

Angemerkt sei, dass die in den lichtmodulierten Signalen enthaltenen Informationen in der mobilen Kommunikationseinrichtung in der Regel nicht durch Auslesen der Bilddaten eines einzelnen Bildes, sondern nur durch ein kontinuierliches Auslesen der entsprechenden Bilddaten mehrerer, in einer kontinuierlichen Sequenz aufgenommenen Bilder wieder gewonnen werden können.

Die Positionen bzw. die Positionskoordinaten der mindestens drei lichtbasierten stationären Einrichtungen sind vorab bekannt. Sie können somit als Fixpunkte betrachtet werden, die vorzugsweise zu einem Gebiet mit einem gemeinsamen Objektraumkoordinatensystem gehören. Das heißt, die Positionskoordinaten der mindestens drei lichtbasierten stationären Einrichtungen werden vorzugsweise bezüglich eines gemeinsamen Koordinatensystems vor dem Start des Verfahrens festgelegt.

Die lichtbasierten stationären Einrichtungen können LEDs, zum Beispiel VLC (visible light communication)-fähige LEDs sein, welche jeweils im sichtbaren oder nicht sichtbaren Spektralbereich moduliertes Licht aussenden.

Jede in Schritt d) bestimmte Beobachtungsinformation enthält einen Beobachtungswert für die Richtung von einem in einer Bildebene der digitalen Bilderfassungseinrichtung abgebildeten Bildpunkt, der die korrespondierende, lichtbasierte stationäre Einrichtung repräsentiert, und zwar zu dieser korrespondierenden, lichtbasierten stationären Einrichtung und/oder einen Beobachtungswert für die Entfernung zwischen der mobilen Kommunikationseinrichtung, insbesondere dem Projektionszentrum der Bilderfassungseinrichtung, und der jeweiligen lichtbasierten stationären Einrichtung. Die Richtung kann in an sich bekannter Weise aus der gegebenen oder bestimmbaren Brennweite der Bilderfassungseinrichtung und der gegebenen Position der jeweiligen lichtbasierten stationären Einrichtung berechnet werden. Die Entfernung kann in an sich bekannter Weise mittels eines Autofokusmechanismus der digitalen Bilderfassungseinrichtung bestimmt werden, der versucht, den abgebildeten Bildpunkt scharf zu stellen.

Vorzugsweise kann in Schritt e) auch die Orientierung der mobilen Kommunikationseinrichtung mit geschätzt werden.

Um präzise Schätzwerte zu erhalten und/oder einen flexiblen Einsatz der lichtbasierten stationären Einrichtungen zu ermöglichen, können die mindestens drei lichtbasierten stationären Einrichtungen durch einen Server unabhängig voneinander angesteuert werden. Insbesondere können die lichtbasierten stationären Einrichtungen unabhängig voneinander ein- oder ausgeschaltet werden. Zusätzlich oder alternativ können die Sendelichtstärke, und/oder die Lichtfarbe bei einer Wellenlängenmodulation, und/oder die Ausstrahlungsrichtung jeder der mindestens drei lichtbasierten stationären Einrichtungen unabhängig voneinander vom Server gesteuert werden.

Die Ausstrahlungsrichtung jeder lichtbasierten stationären Einrichtung ist bekannt und vorzugsweise wie die Positionen der mindesten drei lichtbasierten stationären Einrichtungen in einem gemeinsamen Objektraumkoordinatensystem festgelegt. Sie muss also nicht mehr gemessen werden und kann als gegebene Größe in einem räumlichen Rückwärtsschnitt berücksichtigt werden.

Die Ausstrahlungsrichtung kann vorzugsweise als eine markante statistisch gesehen mittlere Richtung der Lichtausstrahlung definiert sein. Zur Beschreibung der Statistik kann vorzugsweise auch eine Standardabweichung der Ausstrahlungsrichtung vorgegeben werden, die die wahrscheinliche Position der Bilderfassungseinrichtung als Richtungsabweichung von der Ausstrahlungsrichtung als markante Hauptausstrahlungsrichtung beschreibt. So kann die Ausstrahlungsrichtung zum Beispiel die Rotationsachse eines Lichtkegels beschreiben und die Standardabweichung einen vorgegebenen Bezug zum Öffnungswinkel des Kegels haben.

Jeder der mindestens drei lichtbasierten stationären Einrichtungen erzeugt und sendet lichtmodulierte Signale aus, welche Zusatzinformation übertragen. Die Zusatzinformationen enthalten Angaben über die aktuell verwendete Sendelichtstärke und/oder die Ausstrahlungsrichtung der jeweiligen lichtbasierten stationären Einrichtung, und können ortsbasierte Werbeinformationen und/oder Karteninformationen enthalten. Sowohl die Sendelichtleistung als auch die Ausstrahlungsrichtung können in Schritt e) in dem Rückwärtsschnitt als gegebene Größen berücksichtigt werden, um die Position der mobilen Kommunikationseinrichtung besser schätzen zu können.

Gemäß einer vorteilhaften Weiterbildung kann in Schritt e) auch die Position und/oder Richtung wenigstens einer weiterer lichtbasierter stationärer Einrichtung, deren Position nicht bekannt ist, mitgeschätzt werden kann, wobei die mitgeschätzte Position und/oder Richtung zu der wenigstens einen weiteren lichtbasierten stationäre Einrichtung übertragen wird und/oder in einem wiederholt ausgeführten Schritt e) mit berücksichtigt wird.

Angemerkt sei, dass die Richtung der weiteren lichtbasierten stationären Einrichtung ermittelt werden kann, wenn die Daten eines Bildes, welches die Bildpunkte der wenigstens drei lichtbasierten stationären Einrichtungen enthält, ausgewertet und in dem Rückwärtsschnitt zusammen mit dem bekannten Brennpunkt und den bekannten Positionen der wenigstens drei lichtbasierten stationären Einrichtungen berücksichtigt werden. Die Position der wenigstens einen weiteren lichtbasierten stationären Einrichtung kann geschätzt werden, wenn die Bilddaten von zwei zu verschiedenen Zeitpunkten aufgenommenen Bilder, welche jeweils die Bildpunkte der wenigstens drei lichtbasierten stationären Einrichtungen enthalten, ausgewertet und in dem Rückwärtsschnitt zusammen mit dem bekannten Brennpunkt und den bekannten Positionen der wenigstens drei lichtbasierten stationären Einrichtungen berücksichtigt werden. Die Bilder können von einer einzigen Kamera oder von zwei verschiedenen Kameras, welche Bestandteil der digitalen Bilderfassungseinrichtung sein können, aufgenommen werden.

Zur Genauigkeitssteigerung können auch mehrere Rückwärtsschnitte unterschiedlicher Bilder auch unterschiedlicher Zeitpunkte und Kameras in einem Guss, d.h. in einem zusammenhängenden Gleichungssystem ausgewertet werden. Hierbei können zugleich die Positionen von Neupunkten im Objektraum bestimmt werden. Dieses allgemeine Verfahren wird in der Regel als Bündelausgleichung und nicht als mehrfacher Rückwärtsschnitt bezeichnet und ist in der Photogrammetrie als ein gängiges Ausgleichungsverfahren bekannt. Die Gleichungen des räumlichen Rückwärtsschnittes sind aber die zentralen algebraischen Zusammenhänge und im Weiteren wird deswegen begrifflich Rückwärtsschnitt und nicht Bündelausgleichung genutzt, da je nach Bildinformation und Zusatzinformation ein einfacher Rückwärtsschnitt für ein einziges Bild bereits eine Lösung für die gesuchte Position oder zugleich auch die Orientierung liefert.

Das oben genannte technische Problem wird ebenfalls durch die Merkmale des Anspruchs 6 gelöst.

Danach wird ein Positionsbestimmungssystem zum Bestimmen der Position wenigstens einer mobilen, eine digitale Bilderfassungseinrichtung aufweisenden Kommunikationseinrichtung mit Hilfe von mehreren lichtbasierten stationären Einrichtungen umschrieben. Das System umfasst folgende Merkmale:
wenigstens eine mobile Kommunikationseinrichtung, mindestens drei lichtbasierte stationäre Einrichtungen, deren Positionen bekannt sind, wobei die mindestens drei lichtbasierten Einrichtungen jeweils dazu ausgebildet sind, lichtmodulierte Signale auszusenden, welche eine positionsbezogene Information, die der Position der jeweiligen lichtbasierten stationären Einrichtung zugeordnet ist, zu übertragen,
wobei die wenigstens eine mobile Kommunikationseinrichtung folgende Merkmale aufweist:
   eine digitale Bilderfassungseinrichtung,
   wenigstens eine Detektionseinrichtung und wenigstens eine Informations-Gewinnungseinrichtung, die dazu ausgebildet sind, lichtmodulierte Signale von den mindestens drei lichtbasierten stationären Einrichtungen zu detektieren bzw. aus den detektierten lichtmodulierten Signalen die jeweilige positionsbezogene Information zu gewinnen,
   eine Auswerte- und Steuereinrichtung, die dazu ausgebildet ist, unter Ansprechen auf die wieder gewonnenen positionsbezogenen Informationen die Positionen der mindestens drei lichtbasierten stationären Einrichtung zu erhalten, wobei
   die mobile Kommunikationseinrichtung dazu ausgebildet ist, Beobachtungswerte für die Entfernungen zwischen der mobilen Kommunikationseinrichtung und jedem der mindestens drei lichtbasierten stationären Einrichtungen und/oder Beobachtungswerte für die Richtung von wenigstens einem in einer Bildebene der digitalen Bilderfassungseinrichtung abgebildeten Bildpunkt, der die korrespondierende, lichtbasierte stationäre Einrichtung repräsentiert, zu der korrespondierenden lichtbasierten stationären Einrichtung zu ermitteln, wobei
   die Auswerte- und Steuereinrichtung ferner dazu ausgebildet ist, unter Ausführung eines räumlichen Rückwärtsschnitts die Position der mobilen Kommunikationseinrichtung in Abhängigkeit von den Positionen der mindestens drei lichtbasierten stationären Einrichtungen und den ermittelten Beobachtungswerten zu schätzen.

Zweckmäßigerweise enthalten die von den lichtbasierten stationären Einrichtungen ausgesendeten positionsbezogenen Informationen jeweils die Positionskoordinaten der jeweiligen lichtbasierten stationären Einrichtung. Alternativ oder zusätzlich können die von den lichtbasierten stationären Einrichtungen ausgesendeten positionsbezogenen Informationen jeweils eine individuelle Kennung der jeweiligen lichtbasierten stationären Einrichtung enthalten, wobei eine Speichereinrichtung vorgesehen ist, in welcher für jede individuelle Kennung die Position der dazugehörenden lichtbasierten stationären Einrichtung abgespeichert ist, wobei
die Auswerte- und Steuereinrichtung dazu ausgebildet ist, unter Ansprechen auf eine in einer positionsbezogenen Information enthaltene individuelle Kennung die Position der dazugehörenden lichtbasierten stationären Einrichtung aus der Speichereinrichtung abzufragen.

Jede positionsbezogene Information kann ferner eine Angabe über das Koordinatensystem enthalten, bezüglich dessen die Position derjenigen lichtbasierten stationären Einrichtung, die diese positionsbezogene Information aussendet, festgelegt worden ist.

Vorzugsweise sind die Positionen der wenigstens drei lichtbasierten stationären Einrichtungen in einem gemeinsamen Objektraumkoordinatensystem festgelegt. Die mobile Einrichtung kennt in der Regel das Objektraumkoordinatensystem, um die in einem Rückwärtsschnitt geschätzten Positionskoordinaten der mobilen Kommunikationseinrichtung, welche ein eigenes lokales Koordinatensystem verwendet, entsprechend transformieren zu können.

Jede der lichtbasierten stationären Einrichtungen ist dazu ausgebildet, lichtmodulierte Signale auszusenden, welche Zusatzinformation übertragen. Die Zusatzinformationen enthalten Angaben über die aktuell verwendete Sendelichtstärke und/oder die Ausstrahlungsrichtung der jeweiligen lichtbasierten stationären Einrichtung, und können ortsbasierte Werbeinformationen und/oder Karteninformationen enthalten.

Vorteilhafterweise enthalten die mindestens drei lichtbasierten stationären Einrichtungen jeweils eine ansteuerbare Lichtquelle, insbesondere eine LED, zum Aussenden lichtmodulierter Signale, wobei die Lichtquellen jeweils Licht im sichtbaren oder nicht sichtbaren Spektralbereich aussenden können. Das von einer jeweiligen Lichtquelle ausgesendete Licht kann auch dazu verwendet werden, um den Mittelpunkt der entsprechenden lichtbasierten stationären Einrichtung im von der digitalen Bilderfassungseinrichtung aufgenommen Bild zu bestimmen.

Alternativ können die mindestens drei lichtbasierten stationären Einrichtungen jeweils eine weitere ansteuerbare Lichtquelle aufweisen. In diesem Fall wird das von jeweils einer weiteren Lichtquelle ausgesendete Licht dazu verwendet, den Mittelpunkt der entsprechenden Lichtquelle im von der digitalen Bilderfassungseinrichtung aufgenommen Bild zu bestimmen. Die weiteren Lichtquellen können Licht im sichtbaren oder nicht sichtbaren Spektralbereich aussenden. In diesem Fall muss die räumliche Beziehung zwischen den beiden Lichtquellen bekannt sein oder aufgrund der Anordnung aller Lichtquellen in ihrer paarweisen Zuordnung unverwechselbar sein.

Alternativ können die mindestens drei lichtbasierten stationären Einrichtungen jeweils anstatt der weiteren ansteuerbaren Lichtquelle eine Messmarke in ihrer Nähe aufweisen, für die die Informationen der lichtbasierten stationären Einrichtungen gelten, so auch die Objektraumposition. In diesem Fall wird der Mittelpunkt der Messmarke in einem von der digitalen Bilderfassungseinrichtung aufgenommen Bild bestimmt. Die räumliche Beziehung zwischen der Messmarke und der korrespondierenden Lichtquelle muss bekannt sein oder aufgrund der Anordnung aller Lichtquellen und aller Messmarken in ihrer paarweisen Zuordnung unverwechselbar sein.

Ein flexibler Einsatz des Positionsbestimmungssystem kann ermöglicht werden, wenn die mindestens drei lichtbasierten stationären Einrichtungen über ein vorzugsweise drahtgebundenes Netzwerk mit einem Server verbunden sind, der dazu ausgebildet ist, die lichtbasierten stationären Einrichtungen unabhängig voneinander über das drahtgebundene Netzwerk anzusteuern.

Der Server kann vorteilhafter Weise dazu ausgebildet sein, die mindestens drei lichtbasierten stationären Einrichtungen unabhängig voneinander ein- oder auszuschalten, und/oder die Sendelichtstärke, die Farbe und/oder die Ausstrahlungsrichtung der mindestens drei lichtbasierten stationären Einrichtung unabhängig voneinander einzustellen, und/oder Steuersignale zu erzeugen, die die mindestens drei lichtbasierten stationären Einrichtung unabhängig voneinander veranlassen, lichtmodulierte Signale mit Zusatzinformationen auszusenden.

Um eine drahtlose Kommunikation, beispielsweise über ein Mobilfunknetz zwischen der wenigstens einen mobilen Kommunikationseinrichtung und dem Server zu ermöglichen, können sowohl die wenigstens eine mobile Kommunikationseinrichtung als auch der Server jeweils über eine geeignete drahtlose Kommunikationsschnittstelle verfügen.

Die wenigstens eine mobile Kommunikationseinrichtung kann dazu ausgebildet sein, aktuelle Zustandsinformationen zum Server zu übertragen, wobei der Server dazu ausgebildet sein kann, unter Ansprechen auf die aktuellen Zustandsinformationen wenigstens eine der lichtbasierten stationären Einrichtungen entsprechend anzusteuern. Bei den aktuellen Zustandsinformationen kann es sich um die aktuelle Position und gegebenenfalls um die aktuelle und/oder gewünschte Positionsgenauigkeit und/oder die Hauptausstrahlungsrichtung und/oder eine Genauigkeitsangabe handeln. Die gewünschte Positionsgenauigkeit liefert dem Server Informationen, zu entscheiden, ob und gegebenenfalls welche lichtbasierten stationären Einrichtungen eingeschaltet werden sollen.

Die mobile Kommunikationseinrichtung könnte ebenfalls aufgrund der ihr bekannten technischen Daten ihrer digitalen Bilderfassungseinrichtung dem Server mitteilen, in welcher Weise die lichtbasierten stationären Einrichtungen ihre Zusatzinformationen auszusenden haben, damit die Bilderfassungseinrichtung die Informationen möglichst gut detektieren kann. Der Server kann die übermittelten technischen Daten bei Verwendung mehrerer Kameras möglich gut abgleichen, so dass für die Gesamtheit aller Kameras und ihrer zu erzielenden Positionsgenauigkeiten im Mittel möglichst gute Zielgrößen erhalten werden können.

Eine effiziente Energieversorgung kann bereitgestellt werden, wenn die mindesten drei lichtbasierten stationären Einrichtungen über ein drahtgebundenes Netzwerk mit Energie versorgt werden.

Die digitale Bilderfassungseinrichtung kann eine digitale Kamera oder auch zwei digitale Kameras enthalten, die an zwei unterschiedlichen Seiten der mobilen Kommunikationseinrichtung angeordnet sind.

Es kann ein Server vorgesehen sein, der vorzugsweise über ein drahtgebundenes Netzwerk mit mehreren lichtbasierten stationären Einrichtungen verbindbar und dazu ausgebildet ist, die lichtbasierten stationären Einrichtungen unabhängig voneinander über das drahtgebundene Netzwerk anzusteuern.

Der Server kann dazu ausgebildet sein, die lichtbasierten stationären Einrichtungen unabhängig voneinander ein- oder auszuschalten, und/oder die Sendelichtstärke, die Farbe und/oder die Ausstrahlungsrichtung der mindestens drei lichtbasierten stationären Einrichtung unabhängig voneinander einzustellen, und/oder Steuersignale zu erzeugen, die die mindestens drei lichtbasierten stationären Einrichtung unabhängig voneinander veranlassen, lichtmodulierte Signale mit Zusatzinformationen auszusenden.

Der Server kann ferner dazu ausgebildet ist, unter Ansprechen auf von einer mobilen Kommunikationseinrichtung empfangenen aktuellen Zustandsinformationen wenigstens eine der lichtbasierten stationären Einrichtungen entsprechend anzusteuern.

Das oben genannte technische Problem wird ebenfalls durch eine mobile Kommunikationseinrichtung zum Einsatz in einem Positionsbestimmungssystem nach einem der Ansprüche 6 bis 17 gelöst.

Die mobile Kommunikationseinrichtung enthält
eine digitale Bilderfassungseinrichtung, wenigstens eine Detektionseinrichtung und wenigstens eine Informations-Gewinnungseinrichtung, die dazu ausgebildet sind, lichtmodulierte Signale von mindestens drei lichtbasierten stationären Einrichtungen zu detektieren bzw. aus den detektierten lichtmodulierten Signalen die jeweilige positionsbezogene Informationen zu gewinnen,
eine Auswerte- und Steuereinrichtung, die dazu ausgebildet ist, unter Ansprechen auf die wieder gewonnenen positionsbezogenen Informationen die Positionen der mindestens drei lichtbasierten stationären Einrichtung zu erhalten. Die mobile Kommunikationseinrichtung ist dazu ausgebildet, Beobachtungswerte für die Entfernungen zwischen der mobilen Kommunikationseinrichtung und jedem der mindestens drei lichtbasierten stationären Einrichtungen und/oder Beobachtungswerte für die Richtung von jedem in einer Bildebene der digitalen Bilderfassungseinrichtung abgebildeten Bildpunkt, der die entsprechenden lichtbasierten stationären Einrichtung repräsentiert, zu den korrespondierenden lichtbasierten stationären Einrichtungen zu ermitteln. Die Auswerte- und Steuereinrichtung ist ferner dazu ausgebildet, unter Ausführung eines räumlichen Rückwärtsschnitts die Position der mobilen Kommunikationseinrichtung in Abhängigkeit von den Positionen der mindestens drei lichtbasierten stationären Einrichtungen und den ermittelten Beobachtungswerten zu schätzen. Anstelle eines räumlichen Rückwärtsschnitts kann auch eine Bündelausgleichung ausgeführt werden.

Die Auswerte- und Steuereinrichtung kann ferner dazu ausgebildet sein, unter Ausführung eines räumlichen Rückwärtsschnitts und/oder einer Bündelausgleichung die markanten Hauptstrahlungsrichtungen der lichtbasierten stationären Einrichtungen und deren Genauigkeitsangaben im Objektraumkoordinatensystem zu bestimmen und an einen Server zu senden.

Das oben genannte technische Problem wird ebenfalls durch ein Computerprogramm gelöst, welches eine Vielzahl von Anweisungen enthält, welche in wenigstens einer mobilen, eine digitale Bilderfassungseinrichtung aufweisenden Kommunikationseinrichtung speicherbar sind, wobei die Anweisungen, wenn sie von einer Auswerte- und Steuereinrichtung der mobilen Kommunikationseinrichtung ausgelesen und verarbeitet werden, das Verfahren nach einem der Ansprüche 1 bis 6 ausführen.

Die Erfindung wird nachfolgend anhand einiger Ausführungsbeispiele in Verbindung mit den beiliegenden Zeichnungen näher erläutert. Es zeigen:
- Fig. 1: ein beispielhaftes Positionsbestimmungssystem gemäß der Erfindung,
- Fig. 2: eine Blockschaltbild der in Fig. 1 gezeigten mobilen Kommunikationseinrichtung,
- Fig. 3: ein Blockschaltbild des in Fig. 1 gezeigten Servers, und
- Fig. 4: die in Fig. 2 gezeigte mobile Kommunikationseinrichtung, die durch eine digitale Kamera positionier- und orientierungsfähig ist und eine beispielhafte Festlegung eines kommunikationseinrichtungsfesten lokalen Koordinatensystems aufweist.

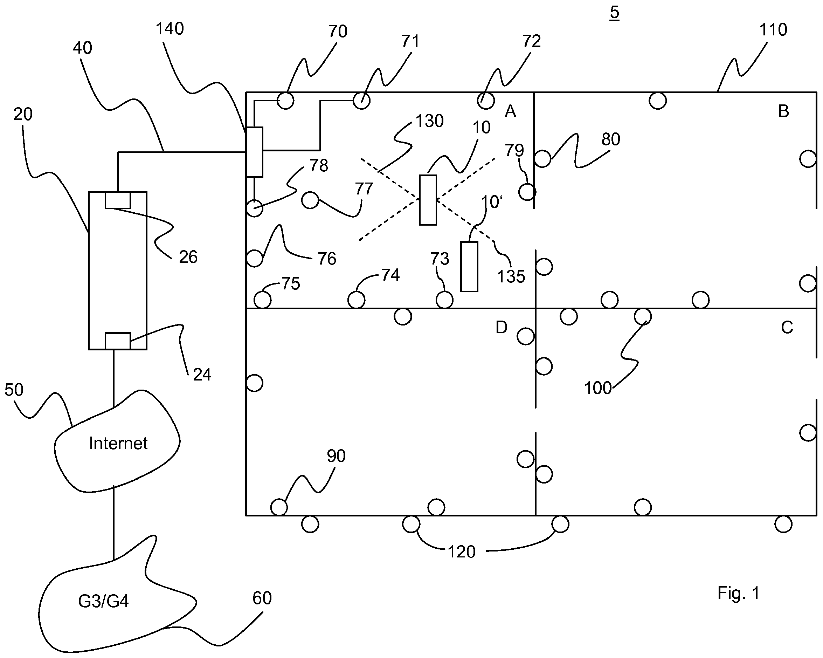

Fig. 1 zeigt ein beispielhaftes Positionsbestimmungssystem 5, welches beispielsweise auf einem Messegelände installiert werden kann. Das Messegelände wird in Fig. 1 ausschnittsweise durch eine in vier Räume A bis D unterteilte Messehalle 110 dargestellt ist. Bereits an dieser Stelle sei angemerkt, dass das Positionsbestimmungssystem 5 sowohl innerhalb von Gebäuden als auch außerhalb von Gebäuden eingesetzt werden kann, um die Position wenigstens einer mobilen, eine digitale Bilderfassungseinrichtung aufweisenden Kommunikationseinrichtung mit Hilfe von mehreren lichtbasierten stationären Einrichtungen zu bestimmen.

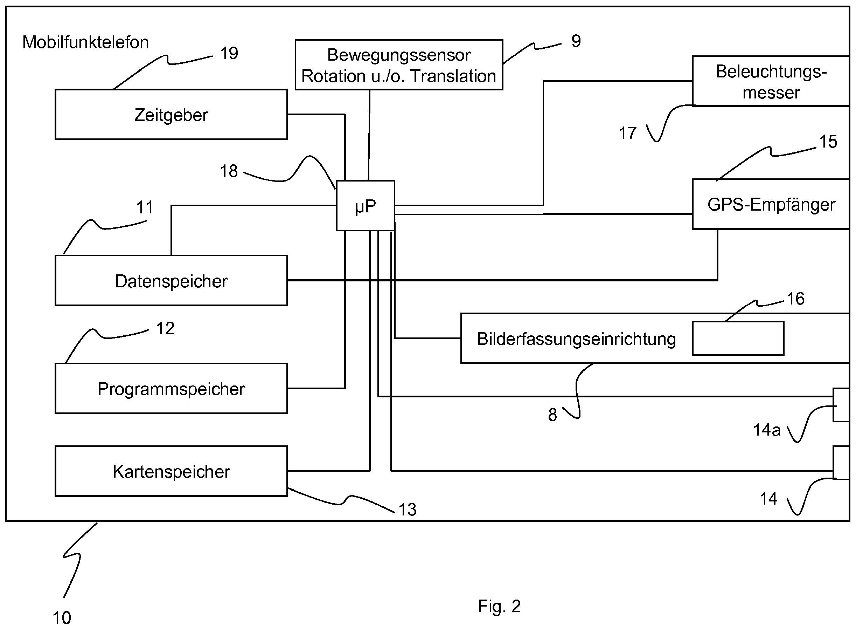

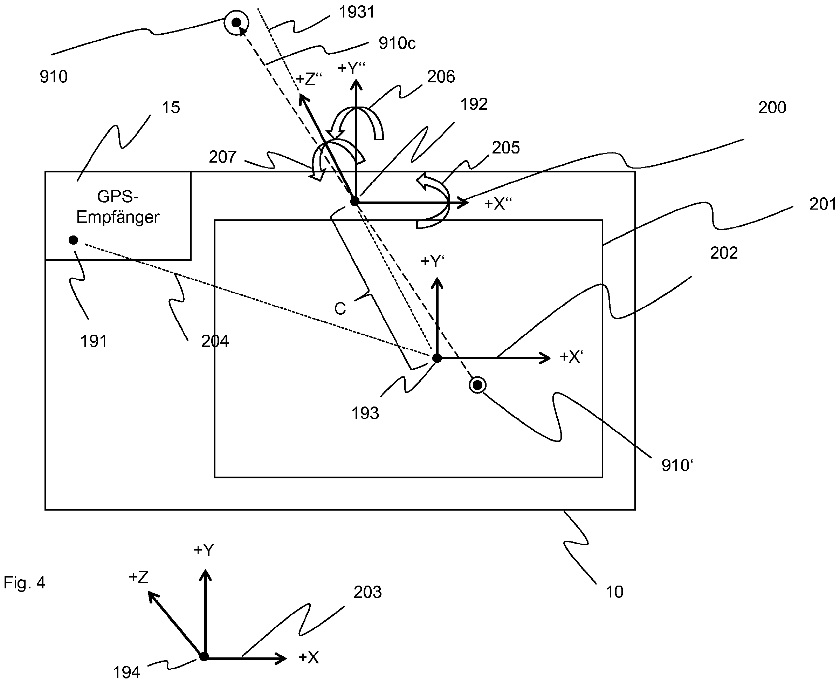

Im vorliegenden Ausführungsbeispiel enthält das Positionsbestimmungssystem 5 zwei mobile Kommunikationseinrichtungen 10 und 10', welche sich aktuell im Raum A der Halle 110 aufhalten. Die mobilen Kommunikationseinrichtungen 10 und 10' sind beispielsweise als Smartphones ausgeführt und enthalten unter anderem die aus herkömmlichen Smartphones bekannten Komponenten. Insbesondere weisen die beiden Smartphones 10 und 10' jeweils eine digitale Bilderfassungseinrichtung auf. Ein beispielhafter Aufbau der Smartphones 10 und 10' wird in Fig. 2 in Verbindung mit dem Smartphone 10 näher erläutert. Die Funktionsweise der Smartphones 10 und 10' wird weiter unten in Verbindung mit Fig. 4 näher erläutert.

Wie hinsichtlich der Fig. 2 noch näher beschrieben wird, weisen beide Smartphones 10 und 10' jeweils eine Bilderfassungseinrichtung 8 auf, die beispielhaft zwei digitale Kameras, welche an der Vorder- bzw. Rückseite der jeweiligen Smartphones angeordnet sind, enthält. Die beiden digitalen Kameras des Smartphones 10 sind in Fig. 1 durch die gestrichelten Sichtfelder 130 und 135 symbolisch dargestellt.

An den Wänden des Raums A sind mehrere lichtbasierte stationäre Einrichtungen 70 bis 76, 78 und 79 installiert. Eine weitere lichtbasierte stationäre Einrichtung 77 ist beispielsweise an der Decke des Raums A befestigt.

Angenommen sei, dass mit Ausnahme der lichtbasierten stationären Einrichtung 77 die Positionen aller übrigen lichtbasierten stationären Einrichtungen des Raums A bereits eingemessen worden sind und somit eine feste bekannte Position besitzen. Die Positionen der lichtbasierten stationären Einrichtungen liegen vorzugsweise als 3-dimensionale Positionskoordinaten sowie deren dazugehörigen Genauigkeiten vor. In jeder der lichtbasierten stationären Einrichtung 70 bis 76, 78 und 79 kann die dazugehörige Position abgespeichert sein. Festzuhalten ist, dass die Positionen der lichtbasierten stationären Einrichtungen 70 bis 76, 78 und 79 hinsichtlich eines gemeinsamen gegebenen Objektraumkoordinatensystems definiert sind, welches ebenfalls in den lichtbasierten stationären Einrichtungen gespeichert sein kann. Um bei einem räumlichen Rückwärtsschnitt oder einer Bündelausgleichung zur Bestimmung der Position oder auch zugleich der Orientierung der mobilen Kommunikationseinrichtung 10 mit einer minimalen Anzahl von nur drei lichtbasierten stationären Einrichtungen, wie zum Beispiel 70 bis 76, 78 und ihren bekannten Objektraumposition auszukommen, müssen die drei im Bild detektierten lichtbasierten stationären Einrichtungen, die die Richtungen definieren, im Objektraum eine allgemeine Lage haben, d. h. sie dürfen nicht alle drei auf einer einzigen Raumgerade liegen. Hierauf sollte bereits bei der Installation der lichtbasierten stationären Einrichtungen geachtet werden.

Um das Positionsbestimmungssystem 5 nicht nur in Gebäuden, sondern auch im Außenbereich verwenden zu können, sind, nur noch schematisch dargestellt, vier lichtbasierte stationäre Einrichtungen 120 an der vorderen Hallenwand angeordnet.

Der Einfachheit halber sei angenommen, dass die lichtbasierten stationären Einrichtung 80 im Raum B, die lichtbasierten stationären Einrichtung 100 im Raum C, die lichtbasierten stationären Einrichtung 90 im Raum D und die externen lichtbasierten stationären Einrichtungen 120 ebenfalls vorab alle eingemessen worden sind. Denkbar ist, dass für die Festlegung der Positionen der lichtbasierten stationären Einrichtungen 80, 90, 100 und 120 verschiedene Objektraumkoordinatensysteme zugrunde gelegt werden können. Wiederum können die Positionskoordinaten und deren Genauigkeiten sowie das verwendete Objektraumkoordinatensystem in den lichtbasierten stationären Einrichtungen 80 bis 120 gespeichert werden.

Weiterhin ist vorzugsweise in jeder der lichtbasierten stationären Einrichtungen eine individuelle, die jeweilige lichtbasierte stationäre Einrichtung kennzeichnende Kennung hinterlegt, deren Bedeutung weiter unten noch näher erläutert wird.

Gemäß einem besonderen Ausführungsbeispiel sind alle in Fig. 1 dargestellten lichtbasierten stationären Einrichtungen über ein drahtgebundenes Netzwerk 40, vorzugsweise ein Ethernet-basiertes Netzwerk mit einem Server 20 verbunden, der irgendwo auf dem Messegelände installiert sein kann. Hierzu kann in der Halle 110 eine entsprechende Kommunikationsschnittstelle 140 vorgesehen sein, an der die lichtbasierten stationären Einrichtungen 70 bis 120 sternförmig, ringbusförmig oder in irgendeiner anderen zweckmäßigen Topologie angeschlossen sein können.

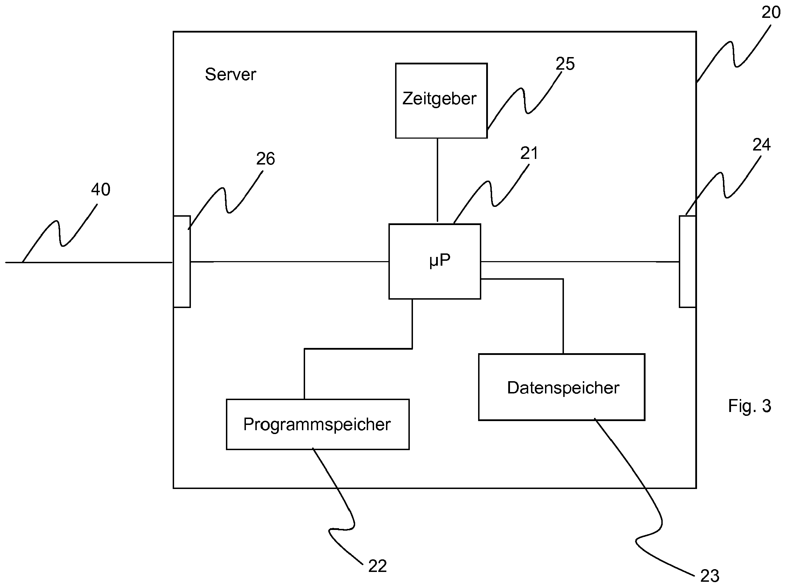

Der Server 20 weist eine entsprechende drahtgebundene Kommunikationsschnittstelle 26 auf, über die er mittels einer Verbindungsleitung mit der Schnittstelle 140 verbunden ist. Ein beispielhaftes Blockschaltbild des Servers 20 ist in Fig. 3 gezeigt.

Eine Aufgabe des Servers 20 besteht darin, die lichtbasierten stationären Einrichtungen 70 bis 120 unabhängig voneinander anzusteuern. Hierzu weist der Server 20 eine Auswerte- und Steuereinheit 21 auf, welche ein geeignetes, in einem Programmspeicher 22 gespeichertes Steuerprogramm ausführen kann. Die Auswerte- und Steuereinheit 21 kann als Mikroprozessor ausgebildet sein. Insbesondere ist der Server dazu ausgebildet, insbesondere die lichtbasierten stationären Einrichtungen 70 bis 120, deren Positionen vorab bekannt sind, unabhängig voneinander ein- oder auszuschalten, und/oder die Sendelichtstärke, die Farbe und/oder die Ausstrahlungsrichtung der lichtbasierten stationären Einrichtung unabhängig voneinander einzustellen, und/oder Steuersignale zu erzeugen, die die lichtbasierten stationären Einrichtung unabhängig voneinander veranlassen, lichtmodulierte Signale mit Zusatzinformationen auszusenden.

Um die lichtbasierten stationären Einrichtungen 70 bis 120 zum Beispiel tageszeit-, und/oder jahreszeit- und/oder wochentagabhängig ansteuern zu können, kann der Mikroprozessor 21 des Servers 20 von einem Zeitgeber 25 getriggert werden. So ist denkbar, dass in Abhängigkeit von der Tageszeit und/oder vom Wochentag gezielt lichtbasierte stationäre Einrichtungen ein- oder ausgeschaltet und/oder deren Sendeleistung eingestellt werden.

Der Server 20 kann eine weitere Kommunikationsstelle 24 aufweisen, über der er mit dem Internet 50 verbunden ist. Auf diese Weise ist es möglich, dass die Smartphones 10 und 10' über ein Mobilfunknetz 60 mit dem Server 20 unter Verwendung seiner IP-Adresse kommunizieren können. Bei dem Mobilfunknetz 60 kann es sich um ein G3- oder G4-Mobilfunknetz handeln. Wie in Fig. 2 gezeigt, weisen die Smartphones 10 und 10' hierfür eine entsprechende Mobilfunk-Kommunikationsschnittstelle 14a auf. Der Server 20 kann ferner dazu ausgebildet sein, unter Ansprechen auf von einer mobilen Kommunikationseinrichtung, zum Beispiel dem Smartphone 10, empfangene aktuelle Zustandsinformationen wenigstens eine der lichtbasierten stationären Einrichtungen entsprechend anzusteuern. Diese Zustandsinformationen können die aktuelle Position des Smartphones 10, deren aktuelle Genauigkeit und gegebenenfalls eine gewünschte Genauigkeit enthalten und in einem Datenspeicher 23 des Servers 20 abgelegt werden.

Angemerkt sei, dass die Positionen der vorab eingemessenen lichtbasierten stationären Einrichtungen 70 bis 120, mit Ausnahme der lichtbasierten stationären Einrichtung 77, alternativ oder auch zusätzlich in dem Speicher 23 des Servers 20 abgespeichert werden können. Die Positionen werden im Server 20 derart abgespeichert, dass sie den jeweiligen individuellen Kennungen der lichtbasierten stationären Einrichtungen zugeordnet sind. Auf diese Weise kann das Smartphone 10 bei Bedarf unter Ansprechen auf die von einer lichtbasierten stationären Einrichtung empfangene individuelle Kennung die dazugehörenden Positionen aus dem Speicher 23 des Servers 20 abfragen.

Die lichtbasierten stationären Einrichtungen 70 bis 120 sind jeweils dazu ausgebildet, lichtmodulierte Signale auszusenden, welche eine positionsbezogene Information, die der Position der jeweiligen lichtbasierten stationären Einrichtung zugeordnet ist, zu übertragen. Eine positionsbezogene Information kann unmittelbar die Positionskoordinaten und gegebenenfalls deren Genauigkeiten der lichtbasierten stationären Einrichtung, welche die positionsbezogene Information aussendet, enthalten. Für den Fall, dass die Positionen der lichtbasierten stationären Einrichtungen im Server 20 hinterlegt sind, kann die positionsbezogene Information die individuelle Kennung der lichtbasierten stationären Einrichtung, welche die jeweilige positionsbezogene Information aussendet, enthalten. In diesem Fall kann, wie bereits erwähnt, dass Smartphone 10 unter Ansprechen auf die in der positionsbezogenen Information enthaltene individuelle Kennung über das Mobilfunknetz 60 eine Verbindung zum Server 20 aufbauen, um die Position der dazugehörenden lichtbasierten stationären Einrichtung aus dem Speicher 23 abzufragen.

Zumindest einige der lichtbasierten stationären Einrichtungen 70 bis 120 können dazu ausgebildet sein, lichtmodulierte Signale auszusenden, welche Zusatzinformation übertragen, wobei die Zusatzinformationen Angaben über die aktuell verwendete Sendelichtstärke, und/oder die Ausstrahlungsrichtung der jeweiligen lichtbasierten stationären Einrichtung, und/oder ortsbasierte Werbeinformationen und/oder Karteninformationen enthalten können.

Jede der lichtbasierten stationären Einrichtungen 70 bis 120 kann eine ansteuerbare Lichtquelle enthalten, vorzugsweise eine LED, beispielsweise eine VLC-fähige LED ist. Jede der lichtbasierten stationären Einrichtung ist ferner dazu ausgebildet, ihre Lichtquelle derart anzusteuern, dass entsprechend der zu übertragenden Informationen lichtmodulierte Signale ausgesendet werden.

Jede der lichtbasierten stationären Einrichtungen 70 bis 120 kann eine zweite Lichtquelle enthalten, deren Licht von der digitalen Bilderfassungseinrichtung 8 des Smartphones 10 dazu verwendet werden kann, den Mittelpunkt der jeweiligen lichtbasierten stationären Einrichtung in den aufgezeichneten Bildern zu bestimmen. Jeder der lichtbasierten stationären Einrichtungen 70 bis 120 kann zusätzlich oder alternativ eine geometrisch nicht verwechselbare, nicht lichtbasierte Messmarke zugeordnet sein, für die die jeweilige lichtbasierte stationäre Einrichtung eine Position und ggf. auch ihre Genauigkeit liefern kann.

Angemerkt sei, dass die mit dem drahtgebundenen Netzwerk 40 verbundenen lichtbasierten stationären Einrichtungen 70 bis 120 über das drahtgebundene Netzwerk 40 mit Energie versorgt werden können.

Fig. 2 zeigt in Form eines Blockschaltbilds einen beispielhaften Aufbau der in Fig. 1 dargestellten mobilen Kommunikationseinrichtung 10, welche ein Mobilfunktelefon, insbesondere ein Smartphone sein kann. Angemerkt sei, dass das Smartphone 10 und das Smartphone 10' in Aufbau und Funktion identisch oder ähnlich sein können, so dass die nachfolgende Erläuterung des Smartphones 10 auch für das Smartphone 10' zutreffend ist.

In an sich bekannter Weise können über das Smartphone 10 Sprach- und Datensignale gesendet und empfangen werden. Hierzu weist das Smartphone 10 wenigstens eine drahtlose Kommunikationsschnittstelle auf, über die es mit anderen beweglichen Kommunikationseinrichtungen, zum Beispiel dem Smartphone 10' und/oder dem Server 20 kommunizieren kann. Im vorliegenden Beispiel weist das Smartphone 10 zwei drahtlose Kommunikationsschnittstellen 14 und 14a auf. Bei der Schnittstelle 14 kann es sich um eine Wi-Fi Direct-fähige oder LTE (LTE Long Term Evolution) Direct-fähige Schnittstelle handeln, während die Schnittstelle 14a als standardisierte Mobilfunkschnittstelle gemäß dem G3 oder G4 Standard ausgebildet sein kann, über welche das Smartphone 10 unter anderem mit dem Server 20 und dem Smartphone 10' Daten austauschen kann.

Angemerkt sei, dass das Smartphone 10 dazu ausgebildet sein kann, über die Datenkommunikationsschnittstellen 14 und 14a unter anderem, wenn vorhanden, seine selbst ermittelten Orientierungsinformationen und Positionsinformationen sowie Beobachtungsinformationen zu wenigstens einer mobilen Kommunikationseinrichtung, wie zum Beispiel dem in Fig. 1 gezeigten Smartphone 10', und/oder zum Server 20 zu übertragen. Die Beobachtungsinformationen repräsentieren Richtungen und/oder relative Orientierungen und/oder Entfernungen zu wenigstens einer anderen mobilen Kommunikationseinrichtung, wie zum Beispiel dem in Fig. 1 gezeigten Smartphone 10, und/oder zu wenigstens einer der in Fig. 1 gezeigten, lichtbasierten stationären Einrichtung. In ähnlicher Weise kann das Smartphone 10 auch die von anderen mobilen Kommunikationseinrichtungen ermittelten Richtungsinformationen und/oder Orientierungsinformationen und/oder Positionsinformationen und/oder Beobachtungsinformationen empfangen und zur Schätzung seiner Position und/oder Orientierung in einer Netzausgleichung als gegebene Größen mit berechnen. Hierzu können in einem Programmspeicher 12 geeignete, beispielsweise aus der Geodäsie bekannte Netzausgleichs-Algorithmen gespeichert werden.

Eine Orientierungsinformation kann zum Beispiel Angaben über einen Orientierungswinkel, dessen Genauigkeit und gegebenenfalls über einen Gültigkeitszeitpunkt enthalten.

Die Position und/oder Orientierung des Smartphones 10 kann, wie nachfolgend noch näher erläutert wird, mittels einer im Smartphone 10 implementierten digitalen Bilderfassungseinrichtung 8 und einem Bildverarbeitungsprogramm automatisch bestimmt werden. Angemerkt sei, dass die Bilderfassungseinrichtung 8 wenigstens eine digitale Kamera enthält. Denkbar ist auch, dass die Bilderfassungseinrichtung 8 zwei digitale Kameras enthält, die zum Beispiel an gegenüberliegenden Seiten des Smartphoness 10 angeordnet sind. Diese Realisierung ist in Fig. 1 durch die beiden Sichtfelder 130 und 135 des Smartphones 10 angedeutet.

Um Beobachtungsinformationen betreffend eine relative Orientierung und/oder Entfernung bereitstellen zu können, können die beispielsweise von der digitalen Bilderfassungseinrichtung 8 aufgezeichnete Bilddaten in einem Speicher der Bilderfassungseinrichtung 8 oder in einer als Datenspeicher bezeichneten Speichereinrichtung 11 der mobilen Kommunikationseinrichtung 10 abgelegt werden. Unter Ausführung des im Programmspeicher 12 gespeicherten Bildverarbeitungsprogramms kann eine Auswerte- und Steuereinrichtung 18 aus den gespeicherten Bilddaten geeignete Beobachtungsinformationen über die Orientierung bzw. Richtung und/oder die Entfernung ableiten, welche in einem räumlichen Rückwärtsschnitt als fehlerfrei gegebene oder fehlerhaft beobachtete Größen berücksichtigt werden können, um die Position und/oder Orientierung des Smartphones 10 zu bestimmen. Die Auswerte- und Steuereinrichtung 18 kann als Mikroprozessor ausgebildet sein. Der Mikroprozessor 18 kann dazu ausgebildet sein, unter Ausführung des Bildverarbeitungsprogramms die Bilddaten der digitalen Bilderfassungseinrichtung 8 nach Beobachtungswerten für einen auszuführenden räumlichen Rückwärtsschnitt zu durchsuchen und diese zu detektieren und zu extrahieren.

Um von den lichtbasierten stationären Einrichtungen 70 bis 120 ausgesendete lichtmodulierte Signale, welche insbesondere einrichtungsbezogene Daten übertragen können, detektieren und aus den detektierten lichtmodulierten Signalen die übertragenen Daten wieder gewinnen zu können, weist das Smartphone 10 wenigstens eine Detektionseinrichtung 16 und eine Informations-Gewinnungseinrichtung auf. Die Detektionseinrichtung 16 wird vorzugsweise durch einen Bildsensor, zum Beispiel einen CCD-Sensor der digitalen Bilderfassungseinrichtung 8 gebildet. Ist eine zweite digitale Kamera im Smartphone 10 implementiert, so weist diese eine weitere Detektionseinrichtung auf. Die Informations-Gewinnungseinrichtung ist vorzugsweise als Software implementiert und kann Teil des Bildverarbeitungsprogramms sein. Unter Ausführung der Anweisungen des Bildverarbeitungsprogramms kann der Mikroprozessor 18 dann die in den empfangenen lichtmodulierten Signalen enthaltenen positionsbezogenen Informationen wieder gewinnen.

Die Auswerte- und Steuereinrichtung 18 ist dazu ausgebildet, unter Ansprechen auf die von mindestens drei lichtbasierten stationären Einrichtungen, zum Beispiel den in Fig. 1 gezeigten LEDs 75, 76 und 78 empfangenen positionsbezogenen Informationen die Positionen der mindestens drei lichtbasierten stationären Einrichtung zu erhalten, wobei die mobile Kommunikationseinrichtung 10 dazu ausgebildet ist, Beobachtungswerte für die Entfernung zwischen der mobilen Kommunikationseinrichtung 10 und jedem der mindestens drei lichtbasierten stationären Einrichtungen und/oder Beobachtungswerte für die Richtung von jedem in der Bildebene 201 der digitalen Bilderfassungseinrichtung 8 abgebildeten Bildpunkt der jeweiligen lichtbasierten stationären Einrichtung zu der korrespondierenden lichtbasierten stationären Einrichtung zu ermitteln. Für den Fall, dass im Smartphone 10 eine zweite digitale Kamera implementiert ist, kann die mobile Kommunikationseinrichtung 10 Beobachtungswerte für die Entfernung zwischen der mobilen Kommunikationseinrichtung 10 und jedem der mindestens drei lichtbasierten stationären Einrichtungen und/oder Beobachtungswerte für die Richtung von jedem in der Bildebene der zweiten digitalen Kamera abgebildeten Bildpunkt der jeweiligen lichtbasierten stationären Einrichtung zu der korrespondierenden lichtbasierten stationären Einrichtung ermitteln. Die Auswerte- und Steuereinrichtung 18 ist dazu ausgebildet, unter Ausführung eines räumlichen Rückwärtsschnitts die Position und/oder Orientierung der mobilen Kommunikationseinrichtung 10 in Abhängigkeit von den Positionen der mindestens drei lichtbasierten stationären Einrichtungen und den mit Hilfe der digitalen Bilderfassungseinrichtung 8 ermittelten Beobachtungswerten zu schätzen. Die Position und/oder Orientierung können im Datenspeicher 11 abgelegt werden. Weist die Bilderfassungseinrichtung 8 mehr als eine Kamera auf, so können vorzugsweise die Orientierungen dieser Kameras vorab relativ zueinander bestimmt und gegeben sein, wodurch für Bilderfassungseinrichtung 8 bzw. das Smartphone 10 nur drei Orientierungswinkel zu bestimmen sind. Entsprechendes gilt für den jeweiligen 3-dimensionalen Offset-Vektor zwischen den Bildkoordinatensystemen der Kameras.

In dem Datenspeicher 11 können auch Positionsinformationen und/oder Ausstrahlungsrichtungen von mehreren lichtbasierten stationären Einrichtungen, wie sie in Fig. 1 gezeigt sind, abgelegt werden. Solche Positionsinformationen können wenigstens eine Positionskoordinate, deren Genauigkeit und vorzugsweise einen Gültigkeitszeitpunkt enthalten. Solche Ausstrahlungsrichtungen können wenigstens eine Ebene oder eine Richtung beschreiben, sowie deren Genauigkeit und vorzugsweise einen Gültigkeitszeitpunkt enthalten.

Der Mikroprozessor 18 kann weiterhin dazu ausgebildet sein, die Kommunikation mit den anderen mobilen Kommunikationseinrichtungen zum Zwecke einer Netzausgleichung mit Beteiligung der mobilen Kommunikationseinrichtung 10 zu steuern, wozu er Anweisungen eines im Programmspeicher 12 abgelegten Programms ausführt.

Das Smartphone 10 kann wenigstens einen Beleuchtungssensor 17 enthalten, um das Umgebungslicht und/oder die Umgebungsbeleuchtungsverhältnisse ermitteln zu können. Mit Hilfe des ermittelten Umgebungslichts und/oder der Umgebungsbeleuchtungsverhältnisse kann das Smartphone 10 die Entfernung zwischen ihm und einer lichtbasierten stationären Einrichtung präziser bestimmen.

Um seine Position selbst bestimmen zu können, kann das Smartphone 10 einen GNSS (Global Navigation Satellite System)-fähigen Empfänger aufweisen, der im vorliegenden Beispiel ein herkömmlicher GPS-Empfänger 15 ist. Der GPS-Empfänger 15 ist zum Empfangen und Auswerten von Positionssignalen eines Satellitensystems ausgebildet. Aus den Positionssignalen wird eine Positionsinformation gewonnen, die die Positionskoordinaten des Smartphones 10, die Genauigkeit dieser Positionskoordinaten und vorzugsweise noch einen Gültigkeitszeitpunkt enthält. Die Genauigkeit liegt in der Regel als Standardabweichung vor. Angemerkt sei, dass ein GPS-Empfänger zur Bestimmung der Position des Smartphones 10 im Rahmen der Erfindung jedoch nicht erforderlich ist. Denn das Smartphone 10 kann seine Position auch ohne GPS-Empfänger 15 ermitteln, indem das Smartphone 10 unter Anwendung eines räumlichen Rückwärtsschnitts automatisch seine Position schätzt. Als gegebene Größen berücksichtigt der Rückwärtsschnitt die Positionskoordinaten und gegebenenfalls deren Genauigkeiten von wenigstens drei lichtbasierten stationären Einrichtungen, welche zum Beispiel von der digitalen Bilderfassungseinrichtung 8 gleichzeitig oder zu verschiedenen Zeitpunkten angezielt und auf der wenigstens einen Bildebene der digitalen Bilderfassungseinrichtung 8 abgebildet werden können, wie dies beispielhaft für den Objektpunkt 910 in Fig. 4 gezeigt ist. Bei dem Objektpunkt 910 kann es sich zum Beispiel um die in Fig. 1 gezeigte LED 76 handeln.

Die für den Rückwärtsschnitt notwendigen Positionsinformationen von mindestens drei lichtbasierten stationären Einrichtungen können auch von den beiden digitalen Kameras des Smartphones 10 angezielt und abgebildet werden, wobei die eine digitale Kamera beispielsweise zwei lichtbasierte stationäre Einrichtungen anzielt, deren ausgesendete lichtmodulierte Signale detektiert und aus den detektierten lichtmodulierten Signale die jeweiligen positionsbezogenen Informationen wieder gewinnt, während die zweite Kamera die positionsbezogene Information von wenigstens einer weiteren lichtbasierten stationären Einrichtung wieder gewinnt.

Das Smartphone 10 kann auch einen Bewegungssensor 9 enthalten, der z. B. relative Positionsänderungen kurzzeitstabil erfasst, ohne hierzu Messungen zu anderen Kommunikationseinrichtungen durchzuführen.

Das Smartphone 10 kann zum Beispiel wenigstens einen kombinierten Bewegungssensor 9 aufweisen, der translatorische und zugleich rotatorische Änderungen der Position und zugleich der Orientierung bezüglich des Smartphones 10 liefert und hierfür keine Infrastruktureinrichtungen außerhalb der mobilen Kommunikationseinrichtung 10 benötigt. Ein kombinierter Bewegungssensor 9 könnte zum Beispiel einen Beschleunigungsmesser und einen Kreisel enthalten.

Durch die zusätzliche Nutzung des Bewegungssensors 9 bezüglich der relativen Änderung von Orientierung bildet das Smartphone 10 ein System zur Koppelorientierung.

Zur Überbrückung von Datenlücken oder einer unzureichenden Gleichzeitigkeit von Mess-, Rechen- oder Ausgleichungsgrößen können zusätzlich auch an sich bekannte Bewegungsmodelle oder Bewegungsänderungsmodelle für Translationen und Rotationen genutzt werden, was durch ein im Programmspeicher 12 speicherbares Programm realisiert werden kann. Hier können zum Beispiel eine sequentielle Ausgleichung oder KALMAN Filtertechniken genutzt werden.

Eine weitere Speichereinrichtung 13 kann im Smartphone 10 vorgesehen sein, um eine digitale geographische Karte abzuspeichern, die navigierbare Elemente enthalten kann. Die navigierbaren Objekte dieser digitalen Karte ermöglichen einem im Speicher 12 abgelegten Programm Navigationsanweisungen zu ermitteln, die die Navigation von einem Objekt zu einem anderen Objekt auch über andere Objekte erlauben, wobei die Objekte Punkt-Objekte und/oder räumliche Objekte sein können. Beispielsweise ist in der Speichereinrichtung 13 die digitale Karte des in Fig. 1 ausschnittsweise dargestellten Messegeländes oder nur der Halle 110 abgelegt. Die digitale Karte wird vorzugsweise von wenigstens einer der in Fig. 1 gezeigten lichtbasierten stationären Einrichtung als Zusatzinformation mittels lichtmodulierter Signale ausgesendet, welche vom Smartphone 10 wieder gewonnen und in der Speichereinrichtung 13 abgelegt werden kann.

Ferner kann das Smartphone 10 einen Zeitgeber 19 aufweisen. Der Zeitgeber 19 kann dazu dienen, zu einem Gültigkeitszeitpunkt den Mikroprozessor 18 und die Bilderfassungseinrichtung anzustoßen, um Beobachtungsinformationen hinsichtlich der zum Gültigkeitszeitpunkt angezielten lichtbasierten stationären Einrichtungen zu ermitteln und den räumlichen Rückwärtsschnitt auszuführen, um die Position des Smartphones 10 für den Gültigkeitszeitpunkt zu schätzen. Der Zeitgeber 19 kann auch dazu verwendet werden, die Tageszeit anzugeben, so dass der Mikroprozessor 18 unter Ansprechen auf die aktuelle Tageszeit zusätzliche Angaben zum Umgebungslicht machen kann.

Um die Funktionsweise der digitalen Bilderfassungseinrichtung 8 hinsichtlich einer Richtungs- und Entfernungsmessung bezüglich einer lichtbasierten stationären Einrichtung besser verstehen zu können, wird nunmehr Fig. 4 betrachtet, wobei nur eine digitale Kamera der Bilderfassungseinrichtung 8 betrachtet wird.

In dem Smartphone 10 kann, wie Fig. 4 symbolisch andeutet, ein kommunikationseinrichtungsfestes lokales 3D-Koordinatensystem 200 mit einem Ursprung 192 hinterlegt sein. Die Fig. 4 zeigt weiterhin den GPS-Empfänger 15 und eine Bildebene 201 der Bilderfassungseinrichtung 8. Die Bildebene kann vorzugsweise die Ebene der Detektionseinrichtung 16 bilden. Die Bildebene 201 wird durch die Achsen X` und Y` eines lokalen kommunikationseinrichtungsfesten 2D-Koordinatensystems 202 festgelegt. Ein Punkt 193 bildet den Hauptpunkt in der Bildebene 201, der durch einen Hauptstrahl 1931 bestimmt ist, welcher senkrecht auf der Bildebene 201 steht und durch das Projektionszentrum 192 der Bilderfassungseinrichtung 8, welches mit dem Ursprung 192 des lokalen 3D-Koordiantensystems 200 zusammenfällt, verläuft. Die Bilderfassungseinrichtung 8 bildet beispielhaft und vereinfachend das Modell einer Lochbildkamera mit der Brennweite C. Brennweite C und Hauptpunkt 193 legen die innere Orientierung der Bilderfassungseinrichtung 8 fest.

Die Definition eines lokalen 3D-Koordinatensystems bezüglich einer Kamera ist dem Fachmann aus der Photogrammetrie, einem Teilgebiet der Geodäsie, bekannt und wird kurz erläutert.

Das lokale Koordinatensystem 200 kann konstruktiv realisiert und/oder vorab statistisch bestimmt werden. Fig. 4 zeigt das lokale 3D-Koordinatensystem 200, welches bezüglich eines festen Antennenbezugspunktes 191 des GPS-Empfängers 15 konstruktiv festgelegt ist. Das lokale Koordinatensystem 200 wird als Translation eines lokalen Bildkoordinatensystems 202 entlang des Hauptstrahles 1931 des Objektives eines Linsensystems der Bilderfassungseinrichtung 8 mit der Brennweite C definiert wird. Alle metrischen und/oder richtungsbezogenen und/oder winkelbezogenen Messungen des Smartphones 10 sind eindeutig bezüglich des lokalen Koordinatensystem 200 darstellbar, wobei das lokale Koordinatensystem 200 des Smartphones 10 in ein übergeordnetes Raumkoordinatensystem 203 transformierbar sind, in welchem beispielsweise die Positionskoordinaten der lichtbasierten stationären Einrichtungen 70 bis 79 festgelegt sein können. Angemerkt sei, dass das lokale Koordinatensystem 200 des Smartphones 10 derart definiert ist, dass seine drei Achsen X", Y" und Z" sowie der Ursprung 192 durch das Kameramodell festgelegt werden und der Sensor 9, der keine kamerabasierten Messungen durchführt, zusätzlich geometrisch auf das Kameramodell bezogen werden, wobei der Ursprung 192 des lokalen Koordinatensystems 200 das Projektionszentrum der Bilderfassungseinrichtung 8 bildet, und der Antennenreferenzpunkt 191 des GPS-Empfängers 15 vorzugsweise die Position des Smarthones 10 definiert. Für den Antennenreferenzpunkt 191 kann eine GPS Koordinate im WGS84 Koordinatensystem vom GPS Empfänger geliefert werden. Vom festen Referenzpunkt 191 gelangt man über einen festen und bekannten Offset-Vektor 204 zum Hauptpunkt 193 des lokalen Koordinatensystems 202. Durch die dargestellten gebogenen Pfeilbänder werden die Drehrichtungen um die zugehörigen Achsen X", Y" und Z" dargestellt.

Richtungsbeobachtungen bzw. Richtungsmessungen, aus denen das Smartphone 10 Beobachtungsinformationen gewinnen kann, können durch gemessene Bildkoordinaten im 2D-Bildkoordinatensystem 202, zum Beispiel des Bildpunktes 910` des Objektraumpunktes 910, durch die bekannte Objektivbrennweite C, den bekannten und festen Hauptpunkt 193, die Lage des Projektionszentrums 192 sowie die drei Orientierungswinkel 205, 206 und 207 und zusätzlich durch die drei Koordinaten des Objektraumpunktes 910 bezüglich des Koordinatensystems 203 algebraisch beschrieben und somit in einem räumlichen Rückwärtsschnitt mit berücksichtigt werden. Bei dem Objektraumpunkt 910 handelt es sich beispielsweise um die in Fig. 1 gezeigte LED 76, die ihre Positionskoordinaten mittels entsprechend lichtmodulierter Signale aussenden kann.

Eine Richtungsmessung zum Objektraumpunkt 910 bzw. zur LED 76 wird beispielsweise mithilfe eines Beobachtungsstrahls 910c durchgeführt. Verzeichnungsparameter des Objektivs oder weitere mögliche zusätzliche Parameter sind hier nicht berücksichtigt, um die Fig. 4 nicht zu überladen. Alle weiteren, in Fig. 4 nicht dargestellten Messungen von Sensoren, insbesondere dem Sensor 9, sind in einem räumlichen Rückwärtsschnitt auf das lokale Koordinatensystem 200 des Smartphones 10 und das übergeordnete Objektraumkoordinatensystem 203 zu beziehen, um die Orientierung und gegebenenfalls die Position des Smartphones 10 und die dazugehörenden Genauigkeiten schätzen zu können.

Festgehalten werden kann, dass das Smartphone 10 die digitale Bilderfassungseinrichtung 8, das im Programmspeicher 12 gespeicherte Bildverarbeitungsprogramm enthält, um in der Bildebene der digitalen Bilderfassungseinrichtung 8 einen Bildpunkt, der den relevanten Punkt der korrespondierenden lichtbasierten stationären Einrichtung repräsentiert, die Entfernung dieser lichtbasierten stationären Einrichtung zum Projektionszentrum 192 der Bilderfassungseinrichtung 8 und/oder die Richtung dieses Bildpunktes zu der korrespondierenden lichtbasierten stationären Einrichtung bestimmen zu können. Das Smartphone 10 kann vorzugsweise ausreichend zeitgleich die Richtung und/oder Entfernung zu wenigstens drei lichtbasierten stationären Einrichtungen, deren Positionen mit Bezug auf ein definiertes Koordinatensystem bekannt sind, bestimmen. Vorzugsweise ist das Smartphone 10 ferner in der Lage sein, die von den lichtbasierten stationären Einrichtungen ausgesendeten lichtmodulierten Signale ausreichend zeitgleich zu detektieren und zu verarbeiten.

Nachfolgend wird die Funktionsweise des in Fig. 1 gezeigten beispielhaften Positionsbestimmungssystems in Verbindung mit den Fig. 2 bis 4 näher erläutert.

Angenommen sei zunächst, dass der Nutzer des Smartphones 10 den Raum A der Halle 110 betreten hat und seine aktuelle Position bestimmen möchte. Weiterhin sei angenommen, dass mit Ausnahme der lichtbasierten stationären Einrichtung 77 alle übrigen lichtbasierten stationären Einrichtungen des Raumes A eingeschaltet sind und lichtmodulierte Signale aussenden, welche jeweils als positionsbezogene Informationen die Positionskoordinaten der jeweiligen lichtbasierten stationären Einrichtungen und Angaben über das zugrunde gelegte Koordinatensystem übertragen. Zudem sei angenommen, dass lediglich die lichtbasierten stationären Einrichtungen 70, 76 und 78 im Raum A eingeschaltet sind und lichtmodulierte Signale aussenden.

Um die Position und gegebenenfalls die Orientierung mit Hilfe eines Rückwärtsschnittes bestimmen zu können, benötigt das Smartphone 10 positionsbezogene Informationen von mindestens drei lichtbasierten stationären Einrichtungen.

Auch bei Auswertung eines einzigen Kamerabildes durch das Smartphone 10 und der Messung der Richtungen des Smartphones 10 nur zu den 3 lichtbasierten stationären Einrichtungen 70, 76 und 78 können beim Rückwärtsschnitt mittels dieses einen Bildes und der drei Richtungen sowie der gegebenen Objektraumpositionen der drei lichtbasierten stationären Einrichtungen 70, 76 und 78 die Position und, wenn gewünscht, die Orientierung des Smartphones 10 bestimmt werden. Sollten hierbei Mehrdeutigkeiten auftreten, können diese aufgrund von Zusatzinformationen in an sich bekannter Weise vermieden werden. Beispielsweise kann eine Eindeutigkeit bei der Positionsbestimmung herbeigeführt werden kann, wenn Vorkenntnisse über die Orientierung der Bilderfassungseinrichtung 8 bzw. deren Kameras aufgrund zeitlich früher bestimmter Größen vorliegen. Mehrdeutigkeiten können auch bei entsprechender Berücksichtigung von in einem Bild detektierten senkrechten oder waagerechten Linien (z.B. bei Fenstern, Hauskanten oder dem Horizont etc.) und/oder durch die Kenntnis einer Ausstrahlungsrichtung einer der lichtbasierten stationären Einrichtungen 70, 76 und 78 vermieden werden. Eine potentielle Mehrdeutigkeit kann auch dadurch vermieden werden, dass bei bewegtem Smartphone 10 Beobachtungsinformationen, wie zum Beispiel Entfernungen und/oder Richtungen zu den lichtbasierten stationären Einrichtungen 70, 76 und 78 durch mehrere zeitlich nacheinander durchgeführte Aufnahmen bestimmt werden, wodurch eine Mehrdeutigkeit auch algebraisch vermieden werden kann.

Angenommen sei nunmehr, dass das Smartphone 10 über das Sichtfeld 130 der vorderen digitalen Kamera der Bilderfassungseinrichtung 8 die lichtbasierten stationären Einrichtungen 70, 76 und 78 anzielen kann. Die digitale Bilderfassungseinrichtung 8 nimmt nunmehr kontinuierlich Bilder von den drei lichtbasierten stationären Einrichtungen 70, 76 und 78 auf und speichert die dazugehörigen Bilddaten beispielsweise im Datenspeicher 11 ab. Die Bilddaten der kontinuierlich aufgenommenen Bilder werden vom Mikroprozessor 18 unter Ansprechen auf ein im Programmspeicher 12 hinterlegtes Informations-Gewinnungsprogramm ausgewertet, und zwar solange, bis die in den empfangenen lichtmodulierten Signalen übertragenen Positionskoordinaten der drei lichtbasierten stationären Einrichtungen 70, 76 und 78 vorliegen.

Das Smartphone 10 kann ferner mit Hilfe der digitalen Bilderfassungseinrichtung 8 Beobachtungsinformationen - Entfernungen und/oder Richtungen - bezüglich jeder der drei lichtbasierten stationären Einrichtungen 70, 76 und 78 bestimmen. Wie anhand der Fig. 4 erläutert wurde, können mit Hilfe der digitalen Bilderfassungseinrichtung 8 im vorliegenden Beispiel Beobachtungswerte für die Richtungen von den in der Bildebene der digitalen Bilderfassungseinrichtung abgebildeten Bildpunkte, die die drei lichtbasierten stationären Einrichtungen 70, 76 und 78 repräsentieren, zu diesen drei lichtbasierten stationären Einrichtungen 70, 78 und 76 bestimmt werden. Alternativ oder zusätzlich können mit Hilfe der digitalen Bilderfassungseinrichtung 8 auch die Entfernungen zwischen dem Smartphone 10 beziehungsweise dem Projektionszentrum der digitalen Bilderfassungseinrichtung 8 und jeder der drei lichtbasierten stationären Einrichtungen 70, 76 und 78 bestimmt werden.

Der Mikroprozessor 18 ruft nunmehr die Anweisungen zur Ausführung des Rückwärtsschnittes aus dem Programmspeicher 12 auf, um die Position des Smartphones 10 unter Berücksichtigung der Positionen der drei lichtbasierten stationären Einrichtungen 70, 76 und 78 sowie der wenigstens drei Beobachtungsinformationen hinsichtlich der drei bestimmten Richtungen und/oder Entfernungen zu drei lichtbasierten stationären Einrichtungen 70, 76, 78 schätzen. Dies ist möglich, da nicht alle der drei lichtbasierten stationären Einrichtungen 70, 76 und 78 auf einer Geraden liegen.

Angenommen sei nunmehr, dass das Smartphone 10 seine aktuell geschätzte Position und, sofern mitgeschätzt, deren Genauigkeiten über das Mobilfunknetz 60 und das Internet 50 zum Server 20 überträgt. Die Daten können im Datenspeicher 23 abgelegt werden. Weiterhin ist dem Server 20 auch bekannt, mit welcher Genauigkeit die Position des Smartphones 10 bestimmt werden soll. Unter Ansprechen auf die aktuelle Position des Smartphones 10 und deren Positionsgenauigkeit kann der Server 20 prüfen, ob weitere lichtbasierte stationäre Einrichtungen gezielt eingeschaltet werden sollen, oder die Sendeleistung der lichtbasierten stationären Steuereinrichtungen 70, 78 und 76 neu eingestellt werden sollte, um die Position und/oder Orientierung des Smartphones 10 präziser bestimmen zu können. Unter dem Ausdruck "gezielt" kann beispielsweise verstanden werden, dass solche weiteren lichtbasierten stationären Einrichtungen eingeschaltet werden, welche bezüglich des Rückwärtsschnitts die sinnvollste geometrische Anordnung bilden. Im vorliegenden Beispiel sei angenommen, dass der Server 20 die lichtbasierte stationäre Einrichtung 79 einschaltet, die daraufhin beginnt, lichtmodulierte Signale auszusenden, die als positionsbezogene Information nicht unmittelbar die Positionskoordinaten, sondern lediglich die individuelle Kennung der lichtbasierten stationären Einrichtung 79 zusammen mit Angeben über das zugrunde gelegte Koordinatensystem überträgt. Die an der Rückseite des Smartphones 10 angeordnete zweite digitale Kamera, welche durch das Sichtfeld 35 symbolisiert ist, detektiert unter anderem die von der lichtbasierten stationären Einrichtung 79 ausgesendeten lichtmodulierten Signale in Form von kontinuierlich aufgenommenen Bilder und speichert die dazugehörenden Bilddaten zum Beispiel im Datenspeicher 11 ab. Der Mikroprozessor 18 ist in der Lage, die gespeicherten Bilddaten auszuwerten und die in den lichtmodulierten Signalen übertragene positionsbezogene Information wieder zu gewinnen und der lichtbasierten stationären Einrichtung 79 zuzuordnen. Der Mikroprozessor 18 wertet nunmehr die wieder gewonnenen positionsbezogenen Informationen aus und erkennt, dass die positionsbezogene Information nicht unmittelbar die Positionskoordinaten übertragen hat, sondern eine individuelle Kennung der lichtbasierten stationären Einrichtung 79. Unter Ansprechen auf die individuelle Kennung der lichtbasierten stationären Einrichtung 79 fragt das Smartphone 10 über das Mobilfunknetz 60 und das Internet 50 die im Server 20 zu dieser individuellen Kennung hinterlegte Position der lichtbasierten stationären Kommunikationseinrichtung 79 ab. Der Server 20 überträgt dann die abgefragte Position zum Smartphone 10. Mit Hilfe der zweiten digitalen Kamera, welche durch das Sichtfeld 135 symbolisiert wird, kann in der zuvor erläuterten Weise nunmehr auch die Richtung und/oder die Entfernung des Smartphones 10 zur lichtbasierten stationären Einrichtung 79 bestimmt werden. Unter Berücksichtigung der zusätzlichen Position der lichtbasierten stationären Einrichtung 79 und der weiteren Richtungs- und/oder Entfernungsmessung zu der lichtbasierten stationären Einrichtung 79 kann in der Auswerte- und Steuereinrichtung 18 unter Ansprechen auf die im Programmspeicher 12 hinterlegten Anweisungen erneut die Position des Smartphones 10 unter Ausführung des räumlichen Rückwärtsschnitts geschätzt werden.

An dieser Stelle sei angemerkt, dass neben der Position auch die Orientierung des Smartphones 10 geschätzt werden kann.

Weiter sei angemerkt, dass zumindest eine der lichtbasierten stationären Einrichtungen 70, 76, 78 und 79 Zusatzinformationen über lichtmodulierte Signale aussenden kann, welche zum Beispiel Angaben über die aktuelle Sendelichtstärke und/oder Ausstrahlungsrichtung der jeweiligen LED enthalten können. Das Smartphone 10 ist dazu ausgebildet, unter Berücksichtigung der empfangenen Sendelichtstärke und/oder Ausstrahlungsrichtung der jeweiligen LED die Richtung und/oder Entfernung zu der jeweiligen lichtbasierten stationären Einrichtung präziser zu messen, so dass auch die Position des Smartphones 10 unter Anwendung des räumlichen Rückwärtsschnitts präziser berechnet werden kann.

Denkbar ist ferner, dass der Server 20 in Abhängigkeit von dem ihm bekannten aktuellen Aufenthaltsort des Smartphones 10 ortsbasierte Werbeinformationen über das drahtgebundene Netzwerk 40 beispielsweise zur lichtbasierten stationären Einrichtung 70 überträgt und diese auffordert, diese ortsbasierte Werbeinformation mittels lichtmodulierter Signale auszusenden. Das Smartphone 10 ist in der Lage, aus den detektierten lichtmodulierten Signale die ortsbasierte Werbeinformationen wieder zu gewinnen und zum Beispiel auf einem Display anzuzeigen. Angemerkt sei, dass die ortsbasierte Werbung bereits vorab in der lichtbasierten stationären Einrichtung 70 abgelegt worden ist. In diesem Fall fordert der Server 20 die lichtbasierte stationäre Einrichtung lediglich auf, die ortsbasierte Werbeinformation auszustrahlen.

Weiterhin ist denkbar, dass in Abhängigkeit von dem aktuellen Aufenthaltsort des Smartphones 10 der Server 20 eine digitale Karte, welche beispielsweise die Halle 110 repräsentiert, über das drahtgebundene Netzwerk 40 zum Beispiel gezielt zur lichtbasierten stationären Einrichtung 76 überträgt und diese auffordert, die digitale Karte mittels entsprechend lichtmodulierter Signale auszusenden. Das Smartphone 10 ist wiederum dazu ausgebildet, in der zuvor beschriebenen Weise die lichtmodulierten Signale zu detektieren und aus den lichtmodulierten Signalen die übertragenen Kartendaten wiederzugewinnen und gegebenenfalls zur weiteren Verwendung in dem Kartenspeicher 13 abzulegen. Bei den Kartendaten kann es sich um navigierbare Daten handeln, die den Nutzer des Smartphones 10 durch die Halle 110 führen können. Die Kartendaten können zudem vom Smartphone 10 dazu verwendet werden, eine fehlerhafte Sequenz von Positionsbestimmungen anzeigen und zu korrigieren, wenn zum Beispiel entdeckt wird, das die Bewegungsspur durch eine Wand führen würde. Hierzu ist das Smartphone 10 dazu ausgebildet, navigierbare Kartendaten auszuwerten, um dem Nutzer über ein Display den Weg anzuzeigen und/oder dem Nutzer den Weg anzusagen.

Denkbar ist, dass auch das Smartphone 10' in der zuvor beschriebenen Art und Weise seine Position in Abhängigkeit von den Positionen mindestens dreier lichtbasierter stationärer Einrichtungen, wie zum Beispiel den lichtbasierten stationären Einrichtungen 73 bis 75, und von Richtungs- und/oder Entfernungswerten, die bezüglich der drei lichtbasierten stationären Einrichtungen 73 bis 75 ermittelt worden sind, unter Ausführung eines räumlichen Rückwärtsschnitts ermittelt hat. All diese Werte können zum Beispiel vom Smartphone 10' über die Kommunikationsschnittstelle 14 zum Smartphone 10 übertragen und als gegebene Größen in dem räumlichen Rückwärtsschnitt berücksichtigt werden, um die Position des Smartphones 10 präziser, und/oder die Position der lichtbasierten stationären Einrichtung 77, deren Position bisher nicht bekannt war, zu schätzen. Das Smartphone 10 kann dazu ausgebildet sein, die für die lichtbasierte stationäre Einrichtung 77 geschätzte Position über das Mobilfunknetz 60 und das Internet 50 zum Server 20 zu übertragen, der wiederum veranlassen kann, dass die Position über das drahtgebundene Netzwerk 40 gezielt zur lichtbasierten stationären Einrichtung 77 übertragen und dort abgelegt wird. Der Server 20 kann ferner veranlassen, dass, sobald die Position der lichtbasierten stationären Einrichtung 77 bekannt ist, auch die lichtbasierte stationäre Einrichtung 77 ihre Positionskoordinaten und/oder ihre individuelle Kennung aussendet.

Um Energie sparen zu können, kann der Server 20 dafür sorgen, dass in den Räumen A bis D alle lichtbasierten stationären Einrichtungen zunächst ausgeschaltet sind. Erst wenn der Nutzer mit seinem Smartphone 10 den Raum A betritt und eine Positionsbestimmung wünscht, kann das Smartphone 10 benutzergesteuert oder automatisch den Server 20 auffordern, wenigstens drei geeignete lichtbasierte stationäre Einrichtungen, beispielsweise die lichtbasierten stationären Einrichtungen 70, 78 und 76 einzuschalten. Erkennt der Nutzer, dass er über das Sichtfeld 130 der digitalen Kamera nicht mindestens drei lichtbasierte stationäre Einrichtungen anzielen kann, kann er über sein Smartphone 10 den Server 20 auffordern, weitere lichtbasierte stationäre Einrichtungen im Raum A einzuschalten.

Angemerkt sei an dieser Stelle, dass der Server 20 unter Steuerung des Zeitgebers 25 beispielsweise nach Mitternacht alle in der Halle 110 installierten lichtbasierten stationären Einrichtungen ausschalten und automatisch beispielsweise ab acht Uhr wieder einschalten kann. Beliebige Szenarien sind denkbar, die der Server 20 berücksichtigen kann, um gezielt lichtbasierte stationäre Einrichtungen ein- oder ausschalten zu können.

Die Anweisungen zur Ausführung des zuvor beschriebenen Verfahrens sind vorzugsweise in den Smartphones 10 und 10' im jeweiligen Programmspeicher 12 und im Programmspeicher 22 des Servers 20 abgelegt.

## Patentansprüche

1. Verfahren zum Bestimmen der Position wenigstens einer mobilen, eine digitale Bilderfassungseinrichtung (8) aufweisenden Kommunikationseinrichtung (10) mit Hilfe von lichtbasierten stationären Einrichtungen (70-120), mit folgenden Verfahrensschritten:
a) Aussenden lichtmodulierter Signale von mindestens drei lichtbasierten stationären Einrichtungen (70, 76, 78), deren Positionen bekannt sind, wobei jede der mindestens drei lichtbasierten stationären Einrichtungen (70, 76, 78) lichtmodulierte Signale aussendet, welche eine positionsbezogene Information, welche der Position der jeweiligen lichtbasierten Einrichtung zugeordnet ist, übertragen;
b) Detektieren, in der mobilen Kommunikationseinrichtung (10), der von den mindestens drei lichtbasierten stationären Einrichtungen (70, 76, 78) ausgesendeten lichtmodulierten Signale, und Gewinnen aus jedem der detektierten lichtmodulierten Signale die jeweilige positionsbezogene Information;
c) Auswerten, in der mobilen Kommunikationseinrichtung (10), der in Schritt b) gewonnenen positionsbezogenen Informationen, um die Position der jeweiligen lichtbasierten stationären Einrichtung (70, 76, 78) zu erhalten;
d) Bestimmen, mit Hilfe der digitalen Bilderfassungseinrichtung (8) der mobilen Kommunikationseinrichtung (10), bezüglich jeder der mindestens drei lichtbasierten stationären Einrichtungen(70, 76, 78) einer Beobachtungsinformation, wobei die Beobachtungsinformation einen Beobachtungswert für die Richtung von einem in einer Bildebene der digitalen Bilderfassungseinrichtung abgebildeten Bildpunkt, der die jeweils korrespondierende, lichtbasierte stationäre Einrichtung repräsentiert, und zwar zu dieser korrespondierenden, lichtbasierten stationären Einrichtung und/oder einen Beobachtungswert für die Entfernung zwischen der mobilen Kommunikationseinrichtung und der jeweiligen lichtbasierten stationären Einrichtung umfasst; und
e) Schätzen, in der mobilen Kommunikationseinrichtung (10), der Position der mobilen Kommunikationseinrichtung in Abhängigkeit von den Positionen der wenigstens drei lichtbasierten stationären Einrichtungen und den wenigstens drei Beobachtungsinformationen unter Ausführung eines räumlichen Rückwärtsschnitts,
**dadurch gekennzeichnet, dass**
jede der mindestens drei lichtbasierten stationären Einrichtungen (70, 76, 78) lichtmodulierte Signale aussendet, welche Zusatzinformation übertragen, wobei die Zusatzinformationen Angaben über die aktuell verwendete Sendelichtstärke, und/oder die Ausstrahlungsrichtung der jeweiligen lichtbasierten stationären Einrichtung enthalten, wobei die Zusatzinformation in Schritt e) zur Positionsbestimmung mit berücksichtigt wird.

2. Verfahren nach Anspruch 1, wobei die Zusatzinformationen ortsbasierte Werbeinformationen und/oder Karteninformationen enthalten.

3. Verfahren nach einem der vorstehenden Ansprüche, wobei
in Schritt e) auch die Orientierung der mobilen Kommunikationseinrichtung (10) geschätzt wird.

4. Verfahren nach einem der vorstehenden Ansprüche, wobei
die mindestens drei lichtbasierten stationären Einrichtungen (70, 76, 78) von einem Server (20) unabhängig voneinander angesteuert, insbesondere ein- oder ausgeschaltet werden können, und/oder dass die Sendelichtstärke, und/oder Lichtfarbe, und/oder die Ausstrahlungsrichtung jeder der mindestens drei lichtbasierten stationären Einrichtungen (70, 76, 78) unabhängig voneinander vom Server gesteuert werden kann.

5. Verfahren nach einem der vorstehenden Ansprüche, wobei
in Schritt e) die Position wenigstens einer weiterer lichtbasierter stationärer Einrichtung (77), deren Position nicht bekannt ist, mitgeschätzt werden kann, und dass
die mit geschätzte Position zu der wenigstens einen weiteren lichtbasierten stationäre Einrichtung (77) übertragen wird und/oder in Schritt e) mit berücksichtigt wird.

6. Positionsbestimmungssystem (5) zum Bestimmen der Position wenigstens einer mobilen, eine digitale Bilderfassungseinrichtung (8) aufweisenden Kommunikationseinrichtung (10) mit Hilfe von mehreren lichtbasierten stationären Einrichtungen (70-120) umfassend
wenigstens eine mobile Kommunikationseinrichtung (10),
mindestens drei lichtbasierte stationäre Einrichtungen (70, 76, 78), deren Positionen bekannt sind, wobei die mindestens drei lichtbasierten Einrichtungen (70, 76, 78) jeweils dazu ausgebildet sind, lichtmodulierte Signale auszusenden, welche eine positionsbezogene Information, die der Position der jeweiligen lichtbasierten stationären Einrichtung (70, 76, 78) zugeordnet ist, übertragen,
wobei die wenigstens eine mobile Kommunikationseinrichtung (10) folgende Merkmale aufweist:
eine digitale Bilderfassungseinrichtung (8),
wenigstens eine Detektionseinrichtung (16) und wenigstens eine Informations-Gewinnungseinrichtung, die dazu ausgebildet sind, lichtmodulierte Signale von den mindestens drei lichtbasierten stationären Einrichtungen zu detektieren bzw. aus jedem detektierten lichtmodulierten Signal die jeweilige positionsbezogene Information zu gewinnen,
eine Auswerte- und Steuereinrichtung (18), die dazu ausgebildet ist, unter Ansprechen auf die wieder gewonnenen positionsbezogenen Informationen die Positionen der mindestens drei lichtbasierten stationären Einrichtungen (70, 76, 78) zu erhalten, wobei die mobile Kommunikationseinrichtung (10) dazu ausgebildet ist, Beobachtungswerte für die Entfernungen zwischen der mobilen Kommunikationseinrichtung und jedem der mindestens drei lichtbasierten stationären Einrichtungen und/oder Beobachtungswerte für die Richtung von wenigstens einem in einer Bildebene der digitalen Bilderfassungseinrichtung abgebildeten Bildpunkt, der die jeweilige lichtbasierte stationäre Einrichtung repräsentiert, zu den korrespondierenden lichtbasierten stationären Einrichtungen zu ermitteln, wobei
die Auswerte- und Steuereinrichtung (18) ferner dazu ausgebildet ist, unter Ausführung eines räumlichen Rückwärtsschnitts die Position der mobilen Kommunikationseinrichtung (10) in Abhängigkeit von den Positionen der mindestens drei lichtbasierten stationären Einrichtungen (70, 76, 78) und den ermittelten Beobachtungswerten zu schätzen,
**dadurch gekennzeichnet, dass**
jede der mindestens drei lichtbasierten stationären Einrichtungen (70-120) dazu ausgebildet ist, lichtmodulierte Signale auszusenden, welche Zusatzinformation übertragen, wobei die Zusatzinformationen Angaben über die aktuell verwendete Sendelichtstärke, und/oder die Ausstrahlungsrichtung der jeweiligen lichtbasierten stationären Einrichtung enthalten, wobei die Auswerte- und Steuereinrichtung (18) der mobilen Kommunikationseinrichtung (10) dazu ausgebildet ist, die Zusatzinformation beim Schätzen der Position der mobilen Kommunikationseinrichtung (10) zu berücksichtigen.

7. Positionsbestimmungssystem nach Anspruch 6, wobei die Zusatzinformationen Angaben über ortsbasierte Werbeinformationen und/oder Karteninformationen enthalten.

8. Positionsbestimmungssystem nach einem der Ansprüche 6 oder 7 ,
wobei
die von den lichtbasierten stationären Einrichtungen (70, 76, 78) ausgesendeten positionsbezogenen Informationen jeweils die Positionskoordinaten der jeweiligen lichtbasierten stationären Einrichtung enthalten, und/oder dass
die von den lichtbasierten stationären Einrichtungen (70, 76, 78) ausgesendeten positionsbezogenen Informationen jeweils eine individuelle Kennung der jeweiligen lichtbasierten stationären Einrichtung enthalten, wobei eine Speichereinrichtung (23) vorgesehen ist, in welcher für jede individuelle Kennung die Position der dazugehörenden lichtbasierten stationären Einrichtung abgespeichert ist, wobei
die Auswerte- und Steuereinrichtung (18) dazu ausgebildet ist, unter Ansprechen auf eine in einer positionsbezogenen Information enthaltene individuelle Kennung die Position der dazugehörenden lichtbasierten stationären Einrichtung (70, 76, 78) aus der Speichereinrichtung (23) abzufragen.

9. Positionsbestimmungssystem nach einem der Ansprüche 6 bis 8,
wobei
jede positionsbezogene Information eine Angabe über das zugrunde gelegte Koordinatensystem enthält.

10. Positionsbestimmungssystem nach einem der Ansprüche 6 bis 9,
wobei
die mindestens drei lichtbasierten stationären Einrichtungen (70, 76, 78) jeweils eine ansteuerbare Lichtquelle, insbesondere eine LED, zum Aussenden lichtmodulierter Signale enthalten, wobei die Lichtquellen Licht im sichtbaren oder nicht sichtbaren Spektrumsbereich aussenden.

11. Positionsbestimmungssystem nach Anspruch 10,
wobei
die mindestens drei lichtbasierten stationären Einrichtungen (70, 76, 78) jeweils eine weitere ansteuerbare Lichtquelle aufweisen, welche den Ort der jeweiligen lichtbasierten stationären Einrichtung signalisiert, wobei die weiteren Lichtquellen Licht im sichtbaren oder nicht sichtbaren Spektrumsbereich aussenden.

12. Positionsbestimmungssystem nach 10 oder 11,
wobei
die mindestens drei lichtbasierten stationären Einrichtungen (70, 76, 78) über ein drahtgebundenes Netzwerk (40) mit einem Server (20) verbunden sind, der dazu ausgebildet ist, die lichtbasierten stationären Einrichtungen unabhängig voneinander über das drahtgebundene Netzwerk anzusteuern.

13. Positionsbestimmungssystem nach Anspruch 12,
wobei
der Server (20) dazu ausgebildet ist, die mindestens drei lichtbasierten stationären Einrichtungen (70, 76, 78) unabhängig voneinander ein- oder auszuschalten, und/oder die Sendelichtstärke, die Farbe und/oder die Ausstrahlungsrichtung der mindestens drei lichtbasierten stationären Einrichtung unabhängig voneinander einzustellen, und/oder Steuersignale zu erzeugen, die die mindestens drei lichtbasierten stationären Einrichtung unabhängig voneinander veranlassen, lichtmodulierte Signale mit Zusatzinformationen auszusenden.

14. Positionsbestimmungssystem nach Anspruch 12 oder 13,
wobei
die wenigstens eine mobile Kommunikationseinrichtung (10) und der Server (20) zur drahtlosen Kommunikation miteinander ausgebildet sind.

15. Positionsbestimmungssystem nach Anspruch 14,
wobei
die wenigstens eine mobile Kommunikationseinrichtung (10) dazu ausgebildet ist, aktuelle Zustandsinformationen zum Server (20) zu übertragen, und dass der Server (20) dazu ausgebildet ist, unter Ansprechen auf die aktuellen Zustandsinformationen wenigstens eine der lichtbasierten stationären Einrichtungen (70, 76, 78) entsprechend anzusteuern.

16. Positionsbestimmungssystem nach einem der Ansprüche 12 bis 15,
wobei
die mindesten drei lichtbasierten stationären Einrichtungen (70, 76, 78) über das drahtgebundene Netzwerk (40) mit Energie versorgt werden.

17. Positionsbestimmungssystem nach einem der Ansprüche 6 bis 16,
wobei
die digitale Bilderfassungseinrichtung (8) wenigstens eine digitale Kamera enthält.

18. Mobile Kommunikationseinrichtung (10) zum Einsatz in einem Positionsbestimmungssystem (5) nach einem der Ansprüche 6 bis 17 enthaltend
eine digitale Bilderfassungseinrichtung (8), wenigstens eine Detektionseinrichtung (16) und wenigstens eine Informations-Gewinnungseinrichtung, die dazu ausgebildet sind, lichtmodulierte Signale von mindestens drei lichtbasierten stationären Einrichtungen (70, 76, 78) zu detektieren bzw. zu aus den detektierten lichtmodulierten Signalen die jeweilige positionsbezogene Information, sowie Zusatzinformationen mit Angaben über die aktuell verwendete Sendelichtstärke, und/oder die Ausstrahlungsrichtung der jeweiligen lichtbasierten stationären Einrichtung zu gewinnen,
eine Auswerte- und Steuereinrichtung (18), die dazu ausgebildet ist, unter Ansprechen auf die wieder gewonnenen positionsbezogenen Informationen die Positionen der mindestens drei lichtbasierten stationären Einrichtungen (70, 76, 78) zu erhalten, wobei
die mobile Kommunikationseinrichtung (10) dazu ausgebildet ist, Beobachtungswerte für die Entfernungen zwischen der mobilen Kommunikationseinrichtung und jedem der mindestens drei lichtbasierten stationären Einrichtungen (70, 76, 78) und/oder Beobachtungswerte für die Richtung von wenigstens einem in einer Bildebene (201) der digitalen Bilderfassungseinrichtung (8) abgebildeten Bildpunkt, der die jeweilige lichtbasierte stationäre Einrichtung repräsentiert, zu den korrespondierenden lichtbasierten stationären Einrichtungen (70, 76, 78) zu ermitteln, und wobei
die Auswerte- und Steuereinrichtung (18) ferner dazu ausgebildet ist, unter Ausführung eines räumlichen Rückwärtsschnitts die Position der mobilen Kommunikationseinrichtung (10) in Abhängigkeit von den Positionen der mindestens drei lichtbasierten stationären Einrichtungen und den ermittelten Beobachtungswerten unter Berücksichtigung der Zusatzinformationen zu schätzen.

19. Computerprogramm enthaltend
eine Vielzahl von Anweisungen, welche in wenigstens einer mobilen, eine digitale Bilderfassungseinrichtung (8) aufweisenden Kommunikationseinrichtung (10, 10') speicherbar sind, wobei die Anweisungen, wenn sie von einer Steuereinrichtung (18) der mobilen Kommunikationseinrichtung (10) nach Anspruch 18 ausgelesen und verarbeitet werden, das Verfahren nach einem der Ansprüche 1 bis 6 ausführen.

## Claims

1. A method for determining the position of at least one mobile communication device (10) that has a digital image capturing device (8) using light-based stationary devices (70 - 120), comprising the method steps of:
a) emitting light-modulated signals by at least three light-based stationary devices (70, 76, 78) whose positions are known, each of the at least three light-based stationary devices (70, 76, 78) emitting light-modulated signals which convey a position-related piece of information associated with the position of the respective light-based device;
b) detecting, in the mobile communication device (10), the light-modulated signals emitted by the at least three light-based stationary devices (70, 76, 78), and deriving the respective position-related information from each of the detected light-modulated signals;
c) evaluating, in the mobile communication device (10), the position-related information obtained in step b) in order to obtain the position of the respective light-based stationary device (70, 76, 78);
d) determining an observation information relating to each of the at least three light-based stationary devices (70, 76, 78), using the digital image capturing device (8) of the mobile communication device (10), wherein the observation information comprises an observation value for the direction of a pixel imaged in an image plane of the digital image capturing device, which represents the respective corresponding light-based stationary device, specifically to said corresponding light-based stationary device, and/or an observation value for the distance between the mobile communication device and the respective light-based stationary device; and
e) estimating, in the mobile communication device (10), the position of the mobile communication device on the basis of the positions of the at least three light-based stationary devices and the at least three observation information by performing a spatial resection;
**characterized in that**
each of the at least three light-based stationary devices (70, 76, 78) emits light-modulated signals which convey additional information, wherein the additional information include indications about the light emission intensity currently used, and/or about the direction of emission of the respective light-based stationary device, wherein said additional information are taken into account in step e) for determining the position.

2. The method according to claim 1, wherein the additional information include location-based advertising information and/or map information.

3. The method according to any one of the preceding claims, wherein step e) also comprises estimating the orientation of the mobile communication device (10).

4. The method according to any one of the preceding claims,
wherein the at least three light-based stationary devices (70, 76, 78) can be controlled independently of one another, in particular switched on or off, by a server (20); and/or
wherein the light emission intensity and/or the light colour and/or the emission direction of each of the at least three light-based stationary devices (70, 76, 78) can be controlled independently from one another by the server.

5. The method according to any one of the preceding claims,
wherein at step e) the position of at least one further light-based stationary device (77), whose position is not known, may also be additionally estimated and
wherein the position additionally estimated is transmitted to the at least one further light-based stationary device (77) and/or is also taken into account in step e).

6. A positioning system (5) for determining the position of at least one mobile communication device (10) which has a digital image capturing device (8) using a plurality of light-based stationary devices (70 - 120), comprising
at least one mobile communication device (10);
at least three light-based stationary devices (70, 76, 78) whose positions are known, wherein the at least three light-based devices (70, 76, 78) are each adapted to emit light-modulated signals which convey a position-related information associated with the position of the respective light-based stationary device (70, 76, 78);
wherein said at least one mobile communication device (10) has the following features:
a digital image capturing device (8);
at least one detection device (16) and at least one information acquisition device, which are adapted to detect light-modulated signals from the at least three light-based stationary devices and to derive the respective position-related information from each detected light-modulated signal;
an evaluation and control device (18) which is adapted to derive the positions of the at least three light-based stationary devices (70, 76, 78) on the basis of the recovered position-related information;
wherein the mobile communication device (10) is adapted to determine observation values for the distances between the mobile communication device and each of the at least three light-based stationary devices, and/or observation values for the direction of at least one pixel imaged in an image plane of the digital image capturing device, which represents the respective light-based stationary device to the corresponding light-based stationary device; wherein the evaluation and control device (18) is also adapted to estimate the position of the mobile communication device (10) on the basis of the positions of the at least three light-based stationary devices (70, 76, 78) and the determined observation values, by performing a spatial resection;
**characterized in that**
each of the at least three light-based stationary devices (70 - 120) is adapted to emit light-modulated signals which convey additional information, wherein the additional information include indications about the light emission intensity currently used, and/or about the direction of emission of the respective light-based stationary device, wherein the evaluation and control device (18) of the mobile communication device (10) is adapted to take into account the additional information when estimating the position of the mobile communication device (10).

7. The positioning system according to claim 6, wherein the additional information include indications about location-based advertising information and/or map information.

8. The positioning system according to any one of claims 6 or 7,
wherein the position-related information emitted by the light-based stationary devices (70, 76, 78) each contain the position coordinates of the respective light-based stationary device; and/or
wherein the position-related information emitted by the light-based stationary devices (70, 76, 78) each contain an individual identifier of the respective light-based stationary device, wherein a storage device (23) is provided which, for each individual identifier, stores the position of the associated light-based stationary device;
wherein the evaluation and control device (18) is adapted to respond to an individual identifier contained in a position-related information by querying the position of the associated light-based stationary device (70, 76, 78) from the storage device (23).

9. The position determination system according to any one of claims 6 to 8,
wherein each position-related information contains an indication of the underlying coordinate system.

10. The positioning system according to any one of claims 6 to 9,
wherein the at least three light-based stationary devices (70, 76, 78) each comprise a controllable light source, in particular an LED, for emitting light-modulated signals, wherein the light sources emit light in the visible or non-visible spectral range.

11. The positioning system according to claim 10,
wherein the at least three light-based stationary devices (70, 76, 78) each have an additional controllable light source which signals the location of the respective light-based stationary device, the additional light sources emitting light in the visible or non-visible spectral range.

12. The positioning system according to claim 10 or 11,
wherein the at least three light-based stationary devices (70, 76, 78) are connected to a server (20) via a wired network (40), which server is adapted to control the light-based stationary devices independently of one another via the wired network.

13. The positioning system according to claim 12,
wherein the server (20) is adapted to switch on or off the at least three light-based stationary devices (70, 76, 78) independently of one another, and/or to adjust the light emission intensity, the colour and/or the emission direction of the at least three light-based stationary devices independently of one another, and/or to generate control signals which cause the at least three light-based stationary devices to emit light-modulated signals with additional information independently of one another.

14. The positioning system according to claim 12 or 13,
wherein the at least one mobile communication device (10) and the server (20) are adapted for wireless communication between each other.

15. The positioning system according to claim 14,
wherein the at least one mobile communication device (10) is adapted to transmit current status information to the server (20); and
wherein the server (20) is adapted to respond to the current status information by controlling at least one of the light-based stationary devices (70, 76, 78) accordingly.

16. The positioning system according to any one of claims 12 to 15,
wherein the at least three light-based stationary devices (70, 76, 78) are powered via the wired network (40).

17. The positioning system according to any one of claims 6 to 16,
wherein the digital image capturing device (8) comprises at least one digital camera.

18. A mobile communication device (10) for use in a positioning system (5) according to any one of claims 6 to 17, comprising
a digital image capturing device (8);
at least one detection device (16) and at least one information acquisition device, which are adapted to detect light-modulated signals from at least three light-based stationary devices (70, 76, 78) and to derive the respective position-related information from the detected light-modulated signals as well as additional information including indications about the light emission intensity currently used and/or about the emission direction of the respective light-based stationary device;
an evaluation and control device (18) which is adapted derive the positions of the at least three light-based stationary devices (70, 76, 78) on the basis of the recovered position-related information;
wherein the mobile communication device (10) is adapted to determine observation values for the distances between the mobile communication device and each of the at least three light-based stationary devices (70, 76, 78), and/or observation values for the direction from at least one pixel imaged in an image plane of the digital image capturing device (8), which represents the respective light-based stationary device, to the corresponding light-based stationary devices (70, 76, 78); and
wherein the evaluation and control device (18) is furthermore adapted to estimate the position of the mobile communication device (10) on the basis of the positions of the at least three light-based stationary devices and the determined observation values by performing a spatial resection while taking into account the additional information.

19. A computer program containing
a plurality of instructions which can be stored in at least one mobile communication device (10, 10') that has a digital image capturing device (8), wherein the instructions, when being read out and processed by a control device (18) of the mobile communication device (10) according to claim 18 will execute the method according to any one of claims 1 to 6.

## Revendications

1. Procédé destiné à déterminer la position d'au moins un dispositif de communication (10) mobile présentant un dispositif de capture d'image (8) numérique à l'aide de dispositifs stationnaires basés sur la lumière (70-120), avec les étapes de procédé suivantes consistant à :
a) émettre des signaux modulés par la lumière depuis au moins trois dispositifs stationnaires basés sur la lumière (70, 76, 78), dont les positions sont connues, où chacun des au moins trois dispositifs stationnaires basés sur la lumière (70, 76, 78) émet des signaux modulés par la lumière qui transmettent une information relative à une position, laquelle information est attribuée à la position du dispositif basé sur la lumière respectif ;
b) détecter, dans le dispositif de communication (10) mobile, les signaux modulés par la lumière émis depuis les au moins trois dispositifs stationnaires basés sur la lumière (70, 76, 78), et acquérir l'information respective relative à une position à partir de chacun des signaux modulés par la lumière détectés ;
c) analyser, dans le dispositif de communication (10) mobile, les informations relatives à une position acquises à l'étape b) pour obtenir la position du dispositif stationnaire basé sur la lumière (70, 76, 78) respectif ;
d) déterminer, à l'aide du dispositif de capture d'image (8) numérique du dispositif de communication (10) mobile, une information d'observation concernant chacun des au moins trois dispositifs stationnaires basés sur la lumière (70, 76, 78), où l'information d'observation comprend une valeur d'observation pour la direction depuis un point d'image représenté dans un plan d'image du dispositif de capture d'image numérique, lequel point d'image représente le dispositif stationnaire basé sur la lumière respectif correspondant, et en l'occurrence vers ce dispositif stationnaire basé sur la lumière correspondant, et/ou une valeur d'observation pour la distance entre le dispositif de communication mobile et le dispositif stationnaire basé sur la lumière respectif ; et
e) estimer, dans le dispositif de communication (10) mobile, la position du dispositif de communication mobile en fonction des positions des au moins trois dispositifs stationnaires basés sur la lumière et des au moins trois informations d'observation lors de l'exécution d'une coupe inversée spatiale,
**caractérisé en ce que**
chacun des au moins trois dispositifs stationnaires basés sur la lumière (70, 76, 78) émet des signaux modulés par la lumière qui transmettent une information complémentaire, où les informations complémentaires contiennent des indications sur l'intensité de lumière d'émission actuellement utilisée et/ou la direction de rayonnement du dispositif stationnaire basé sur la lumière respectif, où l'information complémentaire est prise en compte à l'étape e) pour déterminer la position.

2. Procédé selon la revendication 1, dans lequel les informations complémentaires contiennent des informations promotionnelles et/ou des informations cartographiques basées sur l'emplacement.

3. Procédé selon l'une des revendications précédentes, dans lequel
à l'étape e) est également estimée l'orientation du dispositif de communication (10) mobile.

4. Procédé selon l'une des revendications précédentes, dans lequel
les au moins trois dispositifs stationnaires basés sur la lumière (70, 76, 78) peuvent être pilotés indépendamment les uns des autres par un serveur (20), en particulier être allumés ou éteints, et/ou en ce que l'intensité de lumière d'émission et/ou la couleur de lumière et/ou la direction de rayonnement de chacun des au moins trois dispositifs stationnaires basés sur la lumière (70, 76, 78) peuvent être commandées indépendamment les unes des autres par le serveur.

5. Procédé selon l'une des revendications précédentes, dans lequel
à l'étape e), la position d'au moins un autre dispositif stationnaire basé sur la lumière (77), dont la position n'est pas connue, peut être estimée conjointement, et en ce que
la position estimée conjointement est transmise à l'au moins un autre dispositif stationnaire basé sur la lumière (77) et/ou est prise en compte à l'étape e).

6. Système de détermination de position (5) destiné à déterminer la position d'au moins un dispositif de communication (10) mobile présentant un dispositif de capture d'image (8) numérique à l'aide de plusieurs dispositifs stationnaires basés sur la lumière (70-120) comprenant
au moins un dispositif de communication (10) mobile,
au moins trois dispositifs stationnaires basés sur la lumière (70, 76, 78), dont les positions sont connues, où les au moins trois dispositifs basés sur la lumière (70, 76, 78) sont respectivement conçus pour émettre des signaux modulés par la lumière qui transmettent une information relative à une position, laquelle information est attribuée à la position du dispositif stationnaire basé sur la lumière respectif ;
dans lequel l'au moins un dispositif de communication (10) mobile présente les caractéristiques suivantes :
un dispositif de capture d'image (8) numérique, au moins un dispositif de détection (16) et au moins un dispositif d'acquisition d'information qui sont conçus pour détecter des signaux modulés par la lumière depuis les au moins trois dispositifs stationnaires basés sur la lumière ou pour acquérir, à partir de chaque signal modulé détecté, l'information respective relative à une position,
un dispositif d'analyse et de commande (18) qui est conçu pour obtenir les positions des au moins trois dispositifs stationnaires basés sur la lumière (70, 76, 78) en réponse aux informations relative à une position de nouveau acquises,
dans lequel le dispositif de communication (10) mobile est conçu pour établir des valeurs d'observation pour les distances entre le dispositif de communication mobile et chacun des au moins trois dispositifs stationnaires basés sur la lumière et/ou des valeurs d'observation pour la direction depuis au moins un point d'image représenté dans un plan d'image du dispositif de capture d'image numérique, lequel point d'image représente le dispositif stationnaire basé sur la lumière respectif correspondant, vers les dispositifs stationnaires basés sur la lumière correspondants, où
le dispositif d'analyse et de commande (18) est en outre conçu pour, lors de l'exécution d'une coupe inversée spatiale, estimer la position du dispositif de communication (10) mobile en fonction des positions des au moins trois dispositifs stationnaires basés sur la lumière (70, 76, 78) et des valeurs d'observation établies,
**caractérisé en ce que**
chacun des au moins trois dispositif stationnaires basés sur la lumière (70-120) est conçu pour émettre des signaux modulés par la lumière qui transmettent une information complémentaire, où les informations complémentaires contiennent des indications sur l'intensité de lumière d'émission actuellement utilisée et/ou la direction de rayonnement du dispositif stationnaire basé sur la lumière respectif, où le dispositif d'analyse et de commande (18) du dispositif de communication (10) mobile est conçu pour prendre en compte l'information complémentaire lors de l'estimation de la position du dispositif de communication (10) mobile.

7. Système de détermination de position selon la revendication 6, dans lequel les informations complémentaires contiennent des indications sur des informations promotionnelles et/ou des informations cartographiques basées sur l'emplacement.

8. Système de détermination de position selon l'une des revendications 6 ou 7,
dans lequel
les informations relatives à une position émises depuis les dispositifs stationnaires basés sur la lumière (70, 76, 78) contiennent respectivement les coordonnées de position du dispositif stationnaire basé sur la lumière respectif, et/ou en ce que
les informations relatives à une position émises depuis les dispositifs stationnaires basés sur la lumière (70, 76, 78) contiennent respectivement un identificateur individuel du dispositif stationnaire basé sur la lumière respectif, où un dispositif de stockage (23) est prévu, dans lequel, pour chaque identificateur individuel, la position du dispositif stationnaire basé sur la lumière lui appartenant est stocké, où
le dispositif d'analyse et de commande (18) est conçu pour, en réponse à un identificateur individuel contenu dans une information relative à une position, extraire du dispositif de stockage (23) la position du dispositif stationnaire basé sur la lumière (70, 76, 78) lui appartenant.

9. Système de détermination de position selon l'une des revendications 6 à 8,
dans lequel
chaque information relative à une position contient une indication sur le système de coordonnées qui est utilisé.

10. Système de détermination de position selon l'une des revendications 6 à 9,
dans lequel
les au moins trois dispositifs stationnaires basés sur la lumière (70, 76, 78) contiennent respectivement une source lumineuse pilotable, en particulier une DEL, pour émettre des signaux modulés par la lumière, où les sources lumineuses émettent de la lumière dans la région spectrale visible ou non visible.

11. Système de détermination de position selon la revendication 10,
dans lequel
les au moins trois dispositifs stationnaires basés sur la lumière (70, 76, 78) présentent respectivement une autre source lumineuse pilotable, laquelle signale l'emplacement du dispositif stationnaire basé sur la lumière respectif, où les autres sources lumineuses émettent de la lumière dans la région spectrale visible ou non visible.

12. Système de détermination de position selon la revendication 10 ou 11,
dans lequel
les au moins trois dispositifs stationnaires basés sur la lumière (70, 76, 78) sont reliés via un réseau (40) filaire à un serveur (20), lequel est conçu pour piloter les dispositifs stationnaires basés sur la lumière indépendamment les uns des autres via le réseau filaire.

13. Système de détermination de position selon la revendication 12,
dans lequel
le serveur (20) est conçu pour allumer ou éteindre indépendamment les uns des autres les au moins trois dispositifs stationnaires basés sur la lumière (70, 76, 78), et/ou régler indépendamment les unes des autres l'intensité de lumière d'émission, la couleur et/ou la direction de rayonnement des au moins trois dispositifs basés sur la lumière, et/ou produire des signaux de commande qui amènent indépendamment les uns des autres les au moins trois dispositifs stationnaires basés sur la lumière à émettre des signaux modulés par la lumière avec des informations complémentaires.

14. Système de détermination de position selon la revendication 12 ou 13,
dans lequel
l'au moins un dispositif de communication (10) et le serveur (20) sont conçus pour une communication sans fil entre eux.

15. Système de détermination de position selon la revendication 14,
dans lequel
l'au moins un dispositif de communication (10) mobile est conçu pour transmettre des informations d'état actuelles au serveur (20), et en ce que le serveur (20) est conçu pour piloter en conséquence au moins l'un des trois dispositifs stationnaires basés sur la lumière (70, 76, 78), en réponse aux informations d'état actuelles.

16. Système de détermination de position selon l'une des revendications 12 à 15,
dans lequel
les au moins trois dispositifs stationnaires basés sur la lumière (70, 76, 78) sont alimentés en énergie via le réseau (40) filaire.

17. Système de détermination de position selon l'une des revendications 6 à 16,
dans lequel
le dispositif de capture d'image (8) numérique contient au moins un appareil de prise de vue numérique.

18. Dispositif de communication (10) mobile destiné à être utilisé dans un système de détermination de position (5) selon l'une des revendications 6 à 17, contenant
un dispositif de capture d'image (8) numérique, au moins un dispositif de détection (16) et au moins un dispositif d'acquisition d'information qui sont conçus pour détecter des signaux modulés par la lumière depuis au moins trois dispositifs stationnaires basés sur la lumière (70, 76, 78) ou pour acquérir, à partir des signaux modulés par la lumière détectés, l'information respective relative à une position, ainsi que des informations complémentaires avec des indications sur l'intensité de lumière d'émission actuellement utilisée et/ou la direction de rayonnement du dispositif stationnaire basé sur la lumière respectif,
un dispositif d'analyse et de commande (18), qui est conçu pour obtenir les positions des au moins trois dispositifs stationnaires basés sur la lumière (70, 76, 78) en réponse aux informations relatives à une position de nouveau acquises,
dans lequel
le dispositif de communication (10) mobile est conçu pour établir des valeurs d'observation pour les distances entre le dispositif de communication mobile et chacun des au moins trois dispositifs stationnaires basés sur la lumière (70, 76, 78) et/ou des valeurs d'observation pour la direction depuis au moins un point d'image représenté dans un plan d'image (201) du dispositif de capture d'image (8) numérique, lequel point d'image représente le dispositif stationnaire basé sur la lumière respectif, vers les dispositifs stationnaires basés sur la lumière (70, 76, 78) correspondants, et où
le dispositif d'analyse et de commande (18) est en outre conçu pour, lors de l'exécution d'une coupe inversée spatiale, estimer, en tenant compte des informations complémentaires, la position du dispositif de communication (10) mobile en fonction des positions des au moins trois dispositifs stationnaires basés sur la lumière et des valeurs d'observation établies.

19. Programme d'ordinateur contenant
une pluralité de consignes, lesquelles peuvent être stockées dans au moins un dispositif de communication (10, 10') mobile présentant un dispositif de capture d'image (8) numérique, où les consignes, lorsqu'elles sont lues et traitées par un dispositif de commande (18) du dispositif de communication (10) mobile selon la revendication 18, réalisent le procédé selon l'une des revendications 1 à 6.
